# EUROPEAN PATENT SPECIFICATION

(11) **EP 4 411 997 B1**
(45) Date of publication and mention of the grant of the patent: **22.04.2026**
(21) Application number: 22875148.3
(22) Date of filing: 30.09.2022
(51) Int. Cl.: H01R 13/40, H01R 13/502, H01R 13/52, H01R 13/627, H01R 13/629, H01R 13/658, H01R 13/6591, H01R 13/66, B60L 53/16, H01M 50/50, H01R 11/01, H01R 13/193

(54) **CONNECTING MECHANISM, ELECTRICAL ENERGY TRANSMISSION DEVICE AND MOTOR VEHICLE**
VERBINDUNGSMECHANISMUS, ELEKTRISCHE ENERGIEÜBERTRAGUNGSVORRICHTUNG UND KRAFTFAHRZEUG
MÉCANISME DE CONNEXION, DISPOSITIF DE TRANSMISSION D'ÉNERGIE ÉLECTRIQUE ET VÉHICULE À MOTEUR

(30) Priority: 01.10.2021 CN 202111167062; 01.10.2021 CN 202122400673 U
(43) Date of publication of application: 07.08.2024
(73) Proprietor: Changchun Jetty Automotive Technology Co., Ltd., Changchun, Jilin 130000 (CN)
(72) Inventor: WANG, Chao, Changchun, Jilin 130000 (CN)
(74) Representative: Habermann, Hruschka & Schnabel
(86) International application number: PCT/CN2022/123146
(87) International publication number: WO 2023/051767

(56) References cited:
- CN-A- 103 633 488
- CN-A- 103 633 488
- CN-A- 109 802 253
- CN-A- 113 013 693
- CN-A- 113 013 693
- CN-A- 113 410 683
- CN-A- 113 922 124
- CN-A- 113 922 138
- CN-U- 209 266 699
- CN-U- 209 266 699
- CN-U- 213 959 274
- US-A- 6 139 351

## Description

### RELATED APPLICATION

The present disclosure claims the priority of the Chinese patent with an application number of 202111167062.8, an invention title of 'connecting mechanism, electrical energy transmission device and motor vehicle', and filed on October 1, 2021. The present disclosure further claims the priority of the Chinese patent with an application number of 202122400673.4, a utility model title of 'connecting mechanism, electrical energy transmission device and motor vehicle', and filed on October 1, 2021.

### TECHNICAL FIELD

The present disclosure relates to the field of charging technologies, and particularly to a connecting mechanism, an electrical energy transmission device and a motor vehicle.

### BACKGROUND

The new energy battery of a new energy automobile uses a charging system for energy supplementation. In the charging system, besides a charging socket, there is a high-voltage connecting mechanism connected to a battery system. A charging harness is the most important unit in the high-voltage system of the electric automobile. The traditional charging harness uses a copper wire as a charging cable, and an end of the copper wire is connected to a plug-in terminal, which is electrically connected to the battery system. At present, the high-voltage connecting mechanisms are all assembly structure connectors, which have the problems of complicated structure, difficult assembly and high connector cost. In addition, the high usage amount of copper and the complicated connection processing for the cables and terminals are also the reasons for the high cost of the high-voltage connecting mechanisms.

When high current passes through the high-voltage charging harness, electromagnetic interference may be caused to other components. In order to avoid this electromagnetic interference, it is necessary to add a shielding layer outside high-voltage charging harnesses, which significantly increases the cost and weight.

In addition, in the charging system, a temperature measuring structure is generally mounted on the charging socket rather than the connecting mechanism. But current is also conducted on the connecting mechanism, and when the temperature of the connecting mechanism rises, it is necessary to monitor and stop the charging operation in time to protect the safety of the charging harness and the battery system.

With the expansion of the market of the electric automobiles, the charging system is in urgent need of a connecting mechanism and an electrical energy transmission device which have simple structures and low costs.

Connecting mechanism, electrical energy transmission device and motor vehicle are known in the prior art, e.g, CN103633488A and US6139351A.

### SUMMARY

The present disclosure aims to provide a connecting mechanism, in which busbars are stacked and busbars are set at a proper interval to effectively reduce the electromagnetic interference to other parts after the busbars are energized, thereby achieving the goal of canceling a shielding layer structure of high-voltage charging harnesses and reducing the cost and weight.

The above objective of the present disclosure can be achieved by adopting the following technical solutions.

The present disclosure provides a connecting mechanism, including a male-end connecting mechanism and a female-end connecting mechanism, in which the male-end connecting mechanism includes a busbar, a flat terminal and a male-end shell connected to the busbar and the flat terminal; the female-end connecting mechanism includes a plug-in terminal and a female-end shell connected to the plug-in terminal; the male-end connecting mechanism is electrically connected to the plug-in terminal in the female-end connecting mechanism through the flat terminal, and the male-end shell is connected to the female-end shell to form the connecting mechanism.

In an exemplary embodiment, the busbar has a cross-sectional aspect ratio of 1:1 to 120:1.

According to the invention, there are at least two of the busbars which are stacked up and down; the male-end shell is integrally injection-molded at least part of the busbar and on the periphery of at least part of the flat terminal to form an insulating structure.

**In** an exemplary embodiment, the busbar includes a flat wire core and an outer insulating layer which is partially stripped to expose the flat wire core, and an end of the outer insulating layer is inside or abutted against the male-end shell.

**In** an exemplary embodiment, the busbar includes a flat wire core which has a hardness of 8 HV to 105 HV.

**In** an exemplary embodiment, there are at least two of the busbars which are stacked up and down and include flat wire cores, with a vertical distance between two of the flat wire cores being less than or equal to 27 cm.

**In** an exemplary embodiment, a vertical distance between two of the flat wire cores is less than or equal to 7 cm.

**In** an exemplary embodiment, there are at least two of the busbars which are stacked up and down and include flat wire cores, with an overlap of the two flat wire cores along a stacking direction ranging from 40% to 100%.

**In** an exemplary embodiment, the busbar includes a flat wire core, a front end of which is connected to the flat terminal, and the male-end shell wraps at least part of the flat terminal.

**In** an exemplary embodiment, the busbar includes a flat wire core which forms an integral structure with the flat terminal.

**In** an exemplary embodiment, the flat terminal at least partially protrudes from the male-end shell, or the male-end shell has an accommodating cavity and the flat terminal at least partially protrudes from a bottom surface of the accommodating cavity without exceeding the male-end shell.

**In** an exemplary embodiment, the busbar includes a flat wire core, and a bent portion with an angle of 0° to 180° is included between the flat wire core and the flat terminal.

**In** an exemplary embodiment, the flat terminal is at least partially provided with a conductive anticorrosion layer.

**In** an exemplary embodiment, the conductive anticorrosion layer has a thickness of 0.3 µm to 3000 µm.

**In** an exemplary embodiment, the conductive anticorrosion layer has a thickness of 2.5 µm to 1000 µm.

**In** an exemplary embodiment, an end of the flat terminal is provided with a chamfer.

**In** an exemplary embodiment, the male-end connecting mechanism includes an interlocking connector, which is at least partially integrally injection-molded in the male-end shell.

In an exemplary embodiment, the plug-in terminal includes a fixing portion and a wire clamping portion, the female-end connecting mechanism further includes a cable, the fixing portion is electrically connected to a conductive part at a front end of the cable, and the wire clamping portion is electrically connected to the flat terminal.

In an exemplary embodiment, the wire clamping portion is sleeved by a clip which is made of a memory alloy.

In an exemplary embodiment, a transformation temperature of the memory alloy is set in a range of 40°C to 70°C; when a temperature of the clip is lower than the transformation temperature, the clip is in an expanded state, and when the temperature of the clip is higher than the transformation temperature, the clip is in a clamped state.

In an exemplary embodiment, the wire clamping portion is sleeved by a clip, which includes a sidewall, and an elastic unit fixed on the sidewall and in contacted connection with an outer side of the wire clamping portion.

In an exemplary embodiment, a pressure applied to the wire clamping portion by the elastic unit ranges from 3 N to 200 N.

In an exemplary embodiment, the elastic unit is an elastic rubber body, a spring or a metal elastic sheet.

According to the invention, the wire clamping portion of the plug-in terminal is formed by stacking a plurality of sheet terminals, and grooves are formed in the sheet terminals for plug-in connection with the busbar.

In an exemplary embodiment, a gap between adjacent two of the sheet terminals is less than 0.2 mm.

In an exemplary embodiment, at least part of the material of the sheet terminal is a memory alloy.

In an example, a transformation temperature of the memory alloy is set in a range of 40°C to 70°C; when a temperature of the sheet terminal is lower than the transformation temperature, the grooves in an expanded state, and when the temperature of the sheet terminal is higher than the transformation temperature, the grooves are in a clamped state.

In an exemplary embodiment, the female-end shell is integrally injection-molded on the periphery of at least part of the plug-in terminal to form an insulating structure.

**In** an exemplary embodiment, the female-end connecting mechanism further includes a cable electrically connected to the plug-in terminal, the plug-in terminal and at least part of the cable are disposed in the female-end shell, and the plug-in terminal is at least partially exposed outside the female-end shell.

In an exemplary embodiment, the wire clamping portion at least partially protrudes from an outer wall of the female-end shell, or the female-end shell is provided with an opening boss where the wire clamping portion is at least partially disposed.

In an exemplary embodiment, the female-end connecting mechanism includes a high-voltage interlock structure, which is electrically connected to the interlocking connector to form a loop.

In an exemplary embodiment, the female-end connecting mechanism and/or the male-end connecting mechanism has a sealing structure.

In an exemplary embodiment, the sealing structure is secondary injection-molded on the female-end shell and/or the male-end shell.

In an exemplary embodiment, the female-end connecting mechanism and/or the male terminal connecting mechanism has at least one temperature measuring structure for measuring a temperature of the plug-in terminal and/or the busbar and/or the flat terminal.

In an exemplary embodiment, the temperature measuring structure is attached to the plug-in terminal and/or the busbar and/or the flat terminal to measure a temperature thereof.

In an exemplary embodiment, the male-end connecting mechanism has at least one temperature measuring structure, and there are at least two of the busbars with the temperature measuring structure therebetween to measure temperatures thereof.

In an exemplary embodiment, the male-end connecting mechanism and the female-end connecting mechanism are connected by one or more of adhesive connection, magnetic connection, bayonet connection, plug-in connection, latching connection, binding connection, threaded connection, riveting connection and welding connection.

In an exemplary embodiment, the plug-in terminal includes a wire clamping portion, the flat terminal is plugged with the wire clamping portion to form an electrical connection, and a plug-in force between the flat terminal and the wire clamping portion is between 3 N and 150 N.

In an example, the plug-in force between the flat terminal and the wire clamping portion is between 10 N and 130 N.

In an exemplary embodiment, a contact resistance between the flat terminal and the plug-in terminal is less than 9 mΩ.

In an example, the contact resistance between the flat terminal and the plug-in terminal is less than 1 mΩ.

In an exemplary embodiment, the number of times of plug-in or pull-out between the male-end connecting mechanism and the female-end connecting mechanism is 9 or more.

In an exemplary embodiment, a weight of the male-end connecting mechanism is less than or equal to 305 g.

In an exemplary embodiment, a height of the male-end connecting mechanism along a plug-in or pull-out direction is less than or equal to 108 mm.

In an exemplary embodiment, an electrical energy transmission device, including the aforementioned connecting mechanism.

A motor vehicle, including the aforementioned connecting mechanism. The invention is defined in the appended claims. Here below, "embodiment(s) refer(s) to embodiment(s) of the present disclosure.

The present disclosure has the following characteristics and advantages:
1. The connecting mechanism of the present disclosure is provided with the injection-molded male-end shell, which is simple in processing and low in cost, and can be directly injected into the busbar for insulation, so that the mounting of the busbar can be reduced, and a front end of the busbar can be molded into various shapes as required, without considering the assembly problem, thereby saving the processing procedure and reducing the processing cost.
2. In the connecting mechanism of the present disclosure, the busbars are stacked and set at a proper interval to effectively reduce the electromagnetic interference to other parts after the busbars are energized, thereby achieving the goal of canceling a shielding layer structure of high-voltage charging harnesses and meeting the requirements of reducing the cost and weight.
3. In the connection between the flat terminal and the plug-in terminal, the conductive anticorrosion layer can reduce the electrochemical reaction between the flat terminal of the busbar and the plug-in terminal, and solve the technical problem that the busbar is connectable to other terminals or electrical appliances only through copper terminals.
4. The plug-in terminal is composed of a plurality of sheet terminals which are stacked. The sheet terminals are easy to be deformed and can be plugged with the flat terminal of the busbar. The flat terminal of the busbar is in contact with the strip grooves of the sheet terminals to realize an electrical connection, thereby ensuring the stability of the connection between the plug-in terminal and the busbar.
5. The flat wire core of the busbar and the flat terminal form an integral structure for a direct connection with the plug-in terminal, which solves the problems of high cost and low efficiency of connecting the copper terminal to the busbar, and can realize safe and rapid plug-in or pull-out.
6. The plug-in terminal has a memory function. The strip groove of the plug-in terminal is generally in an expanded state below the transformation temperature. At this time, the flat terminal of the busbar can be plugged without an insertion force, so that the operator can easily plug the electrical appliances. During operation, current is conducted to the plug-in terminal, and the temperature thereof gradually increases due to the effect of resistance. When the temperature rises above the transformation temperature, the strip groove of the plug-in terminal will contract radially, so that the contact area and the contact force between the strip groove of the plug-in terminal and the flat terminal of the busbar can be increased by the temperature rise, and then the contact reliability can be improved. Since the insertion force is omitted, the work is easier and the working efficiency is improved.
7. The embedded high-voltage interlock structure replaces the previous assembled high-voltage interlock structure, and is fixed in the connector by integral injection-molding without assembling, so that the cost is reduced and the high-voltage interlocking effect is completely satisfied.
8. The sealing structure of the connecting mechanism is no longer a separate seal ring, but adopts a secondary injection-molded sealing structure to replace the traditional seal ring, so as to be directly molded on the connecting mechanism, thereby achieving a better injection bonding and a lower cost.
9. By adopting the temperature measuring structure, it is possible to separately monitor the terminal temperature inside the connecting mechanism, and avoid the situation that the temperature of the connecting mechanism cannot be monitored due to the damage of the temperature sensors in other positions.

### BRIEF DESCRIPTION OF THE DRAWINGS

In order to more clearly explain the technical solutions in the embodiments of the present disclosure, the drawings to be used in the description of the embodiments will be briefly introduced as follows.
FIG. 1 illustrates a structural diagram of a connecting mechanism according to the present disclosure.
FIG. 2 illustrates a structural diagram of a male-end connecting mechanism according to the present disclosure.
FIG. 3 illustrates a structural diagram of a flat wire core according to the present disclosure.
FIG. 4 illustrates a structural diagram of a female-end connecting mechanism according to the present disclosure.
FIG. 5 illustrates a structural diagram of a plug-in terminal according to the present disclosure.
FIG. 6 illustrates a schematic diagram of a plugged structure of a flat wire core and a plug-in terminal according to the present disclosure.
FIG. 7 illustrates a structural diagram of an interlocking connector according to the present disclosure.
FIG. 8 illustrates a schematic diagram of a high-voltage interlock structure according to the present disclosure.
FIG. 9 illustrates a schematic diagram of a magnetic field structure of a flat wire core according to the present disclosure.
FIG. 10 illustrates a schematic diagram of a vertical distance structure of a flat wire core according to the present disclosure.
FIG. 11 illustrates a structural diagram of a flat wire core according to the present disclosure.
FIG. 12 illustrates a structural diagram of a clip according to the present disclosure.
FIG. 13 illustrates a cross-sectional view of a connecting mechanism in FIG. 1 in direction A according to the present disclosure.
In which,
10: male-end connecting mechanism; 11: busbar; 111: flat wire core; 112: outer insulating layer; 113: flat terminal; 1131: bent portion; 12: male-end shell; 14: interlocking connector;
20: female-end connecting mechanism; 21: cable; 22: female-end shell; 23: plug-in terminal; 231: fixing portion; 232: wire clamping portion; 234: sheet terminal; 24: high-voltage interlock structure;
30: clip; 31: sidewall; 32: elastic unit;
40: sealing structure.

### DETAILED OF THE EMBODIMENTS

The technical solutions in the embodiments of the present disclosure will be clearly and completely described below in conjunction with the drawings for the embodiments of the present disclosure. Obviously, those described are merely part, rather than all, of the embodiments of the present disclosure.

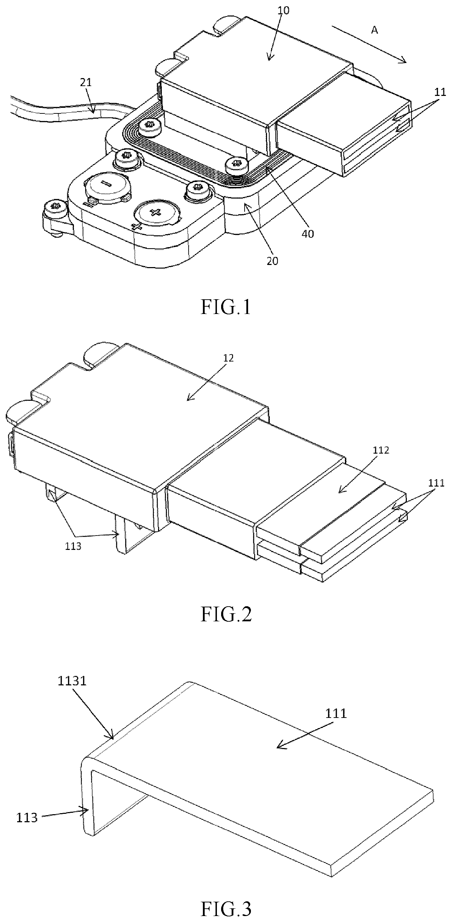

A connecting mechanism, including a male-end connecting mechanism 10 and a female-end connecting mechanism 20, in which the male-end connecting mechanism 10 includes a busbar 11, a flat terminal 113 and a male-end shell 12 connected to the busbar 11 and the flat terminal 113; the female-end connecting mechanism 20 includes a plug-in terminal 23 and a female-end shell 22 connected to the plug-in terminal 23; the male-end connecting mechanism 10 and the female-end connecting mechanism 20 are electrically connected to the plug-in terminal 23 through the flat terminal 113, and the male-end shell 12 is connected to the female-end shell 22 to form the connecting mechanism, as illustrated in FIGS. 1 to 4.

The busbars are stacked and set at a proper interval to effectively reduce the electromagnetic interference to other parts after the busbars are energized, thereby achieving the goal of canceling a shielding layer structure of high-voltage charging harnesses and meeting the requirements of reducing the cost and weight.

Further, the busbar 11 has great advantages in heat dissipation and assembly. Since a conductive part of the busbar 11 has a large aspect ratio, i.e., there is a large plane in contact with the external environment, it is possible to effectively dissipate heat, quickly reduce the temperature rise of the cable caused by current, and prolong the service life of the cable. In addition, during assembly of the cable, when the mounting environment has no enough height, the busbar 11 may be used to reduce the cable laying height, so that the cable can be effectively assembled tightly in contact with the mounting environment, thereby reducing the demand for the mounting space and improving the space utilization rate.

In some embodiments, the busbar 11, the flat terminal 113 and the plug-in terminal 23 contains one or more metallic conductive materials from nickel, cadmium, zirconium, chromium, cobalt, manganese, aluminum, tin, titanium, zinc, copper, silver, gold, phosphorus, tellurium, beryllium and lead, which are stable in properties and good in conductivity, and the exemplary materials are those contain copper or copper alloy or aluminum or aluminum alloy.

In some embodiments, the material of the busbar 11 contains one or more from aluminum, phosphorus, tin, copper, iron, manganese, chromium, titanium and lithium, in which the material of the busbar 11 contains aluminum or aluminum alloy, which is one of the main means for energy saving and cost reduction in the near future. In the field of electrical connections, the copper conductor is used for current conduction since copper has high conductivity and good ductility. However, with the increasing price of copper, the material cost of the conductor made of copper is higher and higher. To this end, people begin to look for alternatives to copper to reduce the cost. The content of metallic aluminum in the earth's crust is about 7.73%, and after the optimization of the refining technology, the price thereof is relatively low. In addition, compared with copper, aluminum is lighter, and its conductivity is second only to copper, so that aluminum can partially replace copper or copper alloy in the field of electrical connections. Therefore, replacing copper with aluminum is the development trend in the field of electrical connections of automobiles.

In an embodiment, the busbar 11 has a cross-sectional aspect ratio of 1:1 to 120:1.

In order to verify the influence of the cross-sectional aspect ratio of the busbar 11 on the temperature rise and the tensile strength of the busbar 11, the inventor selects the samples of the busbars 11 with the same cross-sectional specification and different aspect ratios to test the temperature rise and the tensile strength of the busbars 11, and the test results are shown in Table 1.

The test method for the temperature rise of the busbar 11 is to energize the busbar 11 with the same current, detect the temperatures at the same position of the busbar 11 before energization and after temperature stabilization in a closed environment, make a difference between the temperatures and take an absolute value thereof. In this embodiment, it is considered as unqualified when the temperature rise is greater than 50K.

The test method for the tensile strength of the busbar 11 is to adopt a universal tensile tester, fix both ends of the sample of the busbar 11 on a tensile fixture of the universal tensile tester and stretch at a speed of 50 mm/min, and record a tensile value when the sample finally breaks. In this embodiment, it is considered as qualified when the tensile value is greater than 1600 N.

**Table 1: Influence of the cross-sectional aspect ratio of the busbar 11 on the temperature rise and the tensile strength of the busbar 11**

| Cross-sectional aspect ratios of different busbars 11 | | | | | | | | | | | | | |
|---|---|---|---|---|---|---|---|---|---|---|---|---|---|
| 0.6: 1 | 0.8: 1 | 1: 1 | 5: 1 | 10: 1 | 20: 1 | 40: 1 | 60: 1 | 80: 1 | 100: 1 | 110: 1 | 120:1 | 130:1 | 140: 1 |

| Temperature rise of the busbar 11 (K) | | | | | | | | | | | | | |
|---|---|---|---|---|---|---|---|---|---|---|---|---|---|
| 54 | 52 | 49 | 47 | 45 | 42 | 39 | 37 | 34 | 31 | 28 | 26 | 22 | 18 |

| Tensile strength of the busbar 11 (N) | | | | | | | | | | | | | |
|---|---|---|---|---|---|---|---|---|---|---|---|---|---|
| 1978 | 2004 | 2035 | 1998 | 1964 | 1931 | 1862 | 1798 | 1733 | 1672 | 1638 | 1611 | 1589 | 1567 |

As can be seen from Table 1, when the cross-sectional aspect ratio of the busbar 11 is less than 1:1, it is unqualified when the temperature rise of the busbar 11 is greater than 50 K; when the cross-sectional aspect ratio of the busbar 11 is greater than or equal to 1:1, it is qualified when the temperature rise of the busbar 11 is less than 50 K, and the state is getting better and better, because the heat dissipation area of the busbar 11 increases as the increases of the cross-sectional aspect ratio of the busbar 11. Therefore, with the same temperature increase, the busbar 11 with a better heat dissipation has a lower temperature rise. When the cross-sectional aspect ratio of the busbar 11 is greater than 120:1, because the busbar 11 is too thin and cannot withstand significant tensile forces and may break when subjected to tension, and then the tensile strength thereof does not meet the qualified value. Therefore, the inventor sets the cross-sectional aspect ratio of the busbar 11 as 1:1 to 120: 1.

According to the invention, as illustrated in FIG. 2, there are at least two of the busbars 11 which are stacked up and down. The male-end shell 12 is integrally injection-molded at least part of the busbars 11 and on the periphery of at least part of the flat terminals 113 to form an insulating structure.

Generally, the conductive loop is composed of two loops. For example, in the DC charging socket, there are a DC positive charging cable and a DC negative charging cable, and in the AC charging socket, there are an AC live charging cable and an AC neutral charging cable. The busbars 11 are stacked up and down to effectively utilize the assembly space and offset the electromagnetic interference. After the two busbars 11 are stacked up and down, the raw material of the male-end shell 12 is injected into the space between and around the busbars 11 by an injection mold to form the male-end shell 12.

In some embodiments, when there are many loops to be connected, the number of the busbars 11 may also be three, four or more to connect different loops.

According to the invention, the connecting mechanism is provided with the injection-molded male-end shell 12, which is simple in processing and low in cost, and can be directly injected into the busbar 11 for insulation, so that the mounting of the busbar 11 can be reduced, and a front end of the busbar 11 can be molded into various shapes as required, without considering the assembly problem, thereby saving the processing procedure and reducing the processing cost.

Further, the busbar 11 has great advantages in heat dissipation and assembly. Since the conductive part of the busbar 11 has a large aspect ratio, i.e., there is a large plane in contact with the external environment, it is possible to effectively dissipate heat, quickly reduce the temperature rise of the cable caused by current, and prolong the service life of the cable. In addition, during assembly of the cable, when the mounting environment has no enough height, the busbar 11 may be used to reduce the cable laying height, so that the cable can be effectively assembled tightly fitting the mounting environment, thereby reducing the demand for the mounting space and improving the space utilization rate.

According to the invention, the busbar 11 includes a flat wire core 111 and an outer insulating layer 112 which is partially stripped to expose the flat wire core 111, and an end of the outer insulating layer 112 is inside or abutted against the male-end shell 12.

The flat wire core 111 is the conductive part of the busbar 11, and the outer insulating layer 112 is the insulating part of the busbar 11. Before the male-end shell 12 is injection-molded, it is necessary to peel off a part of the outer insulating layer 112 of the busbar 11 to expose the flat wire core 111 inside, and then the integral injection molding of the male-end shell 12 is carried out.

Exemplarily, the busbar 11 includes a flat wire core 111 which has a hardness of 8 HV to 105 HV.

In order to verify the influence of the hardness of the flat wire core 111 on the peeling force of the flat terminal 113 from the flat wire core 111 and the bending torque of the flat wire core 111 in direction of XY, the inventor selects the samples of the flat wire cores 111 with the same size and different hardness to test the peeling force of the flat terminal 113 from the flat wire core 111 and the bending torque of the flat wire core 111, and the test results are shown in Table 2.

The test method for the peeling force of the flat terminal 113 is to adopt a universal tensile tester, vertically fix the flat terminal 113 and the flat wire core 111 on a tensile fixture of the universal tensile tester and stretch at a speed of 50 mm/min, and record the tensile value when the flat terminal 113 is finally peeled off from the flat wire core 111. In this embodiment, it is qualified when the tensile value is greater than 900 N.

The test method for the bending torque of the flat wire core 111 is to adopt a torque tester to test the torque value of the deformation of the flat wire core 111 during bending when the flat wire core 111 is bent by 90° at the same radius and the same speed. In this embodiment, it is qualified when the torque value is less than 30 N•m.

**Table 2: Influence of the hardness of the flat wire core 111 on the peeling force of the flat terminal 113 and the bending torque of the flat wire core 111**

| Flat wire cores 111 with different hardness (HV) | | | | | | | | | | | |
|---|---|---|---|---|---|---|---|---|---|---|---|
| 3 | 5 | 8 | 10 | 15 | 35 | 55 | 65 | 85 | 105 | 110 | 115 |

| Peeling force of the flat terminal 113 (N) | | | | | | | | | | | |
|---|---|---|---|---|---|---|---|---|---|---|---|
| 864 | 882 | 908 | 932 | 948 | 954 | 968 | 974 | 983 | 995 | 1008 | 1016 |

| Torque value of bending in direction XY (N•m) | | | | | | | | | | | |
|---|---|---|---|---|---|---|---|---|---|---|---|
| 20.8 | 21.6 | 22.7 | 23.5 | 24.3 | 25.2 | 25.9 | 27.0 | 28.1 | 29.2 | 30.4 | 30.7 |

As can be seen from Table 2, when the hardness of the flat wire core 111 is less than 8 HV, the tensile force for peeling off the flat terminal 113 from the flat wire core 111 is less than the qualified value. At this time, the flat terminal 113 connected to the flat wire core 111 is easily peeled off from the flat wire core 111 under an external force, which disables the circuit conduction to the flat wire core 111 and the function of the flat wire core 111, so that the purpose of electrical energy transmission cannot be achieved, and short circuit may be caused in serious cases, resulting in burning accidents. When the hardness of the flat wire core 111 is greater than 105 HV, due to the high hardness of the flat wire core 111 itself, a larger torque is required to deform the flat wire core 111 if the flat wire core 111 needs to be bent, and the torque value does not meet the qualified value at this time. Therefore, the inventor sets the hardness of the flat wire core 111 as 8 HV to 105 HV.

As can be seen from the data in Table 2, when the hardness of the flat wire core 111 is 10 HV to 55 HV, both the tensile value when the flat terminal 113 is peeled off from the flat wire core 111 and the torque value of bending of the flat wire core 111 in direction XY are well within their ranges. Therefore, the inventor may choose the hardness of the flat wire core 111 to be 10 HV to 55 HV.

Further, there are at least two of the busbars 11 which are stacked up and down and include flat wire cores 111, with a vertical distance between two of the flat wire cores 111 being less than or equal to 27 cm.

Further, there are at least two of the busbars 11 which include flat wire cores 111, with a vertical distance between two of the flat wire cores 111 being less than or equal to 7 cm.

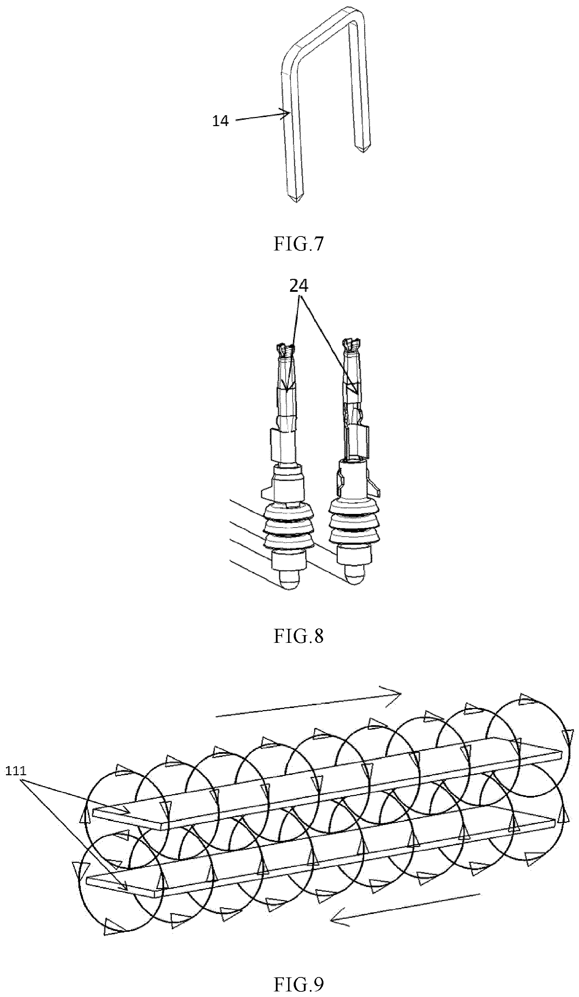

As illustrated in FIG. 9, when being energized, the busbar 11 generates an induced magnetic field which will cause electromagnetic interference to the outside. In the prior art, the usual solution is to dispose an electromagnetic shielding layer outside the busbar 11. In order to cancel the shielding structure and reduce the cost and weight, the present disclosure adopts the following design, and the electrical energy transmission system for automobiles includes two stacked busbars 11.

When the two busbars 11 are stacked up and down, the generated magnetic fields are as illustrated in FIGS. 9 to 11. Since the flat wire core 111 is a flat structure, the strongest magnetic field is existed in the part with a largest area. By stacking the two flat wire cores 111, the magnetic fields thereof can be cancelled by each other (since the current in the two flat wire cores 111 has the same magnitude and opposite directions, the induced magnetic fields also have the same intensity but opposite directions), thereby eliminating the electromagnetic interference to other electrical appliances when the flat wire cores 111 are energized.

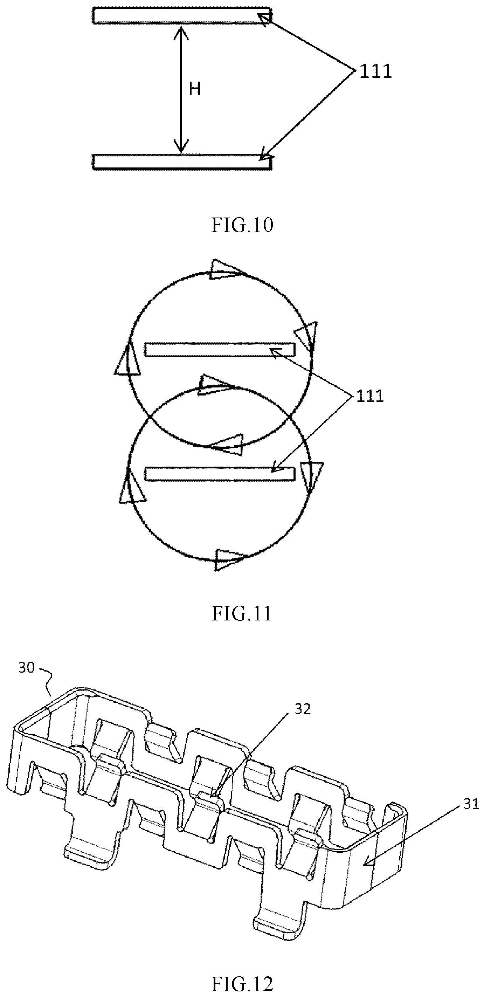

Exemplarily, the width directions of the two busbars 11 are parallel to each other. The busbars 11 are mirror images relative to each other, with a distance H therebetween. The stacking direction of the two busbars 11 is a vertical direction in FIG. 10.

When the two busbars 11 have an overlap of 100% along the stacking direction, the influence of the distance H between the flat wire cores 111 on the magnetic field cancellation is shown in Table 3, and it is qualified when the percentage of magnetic field cancellation is greater than 30%.

**Table 3: Influence of the distance H between the flat wire cores 111 on the magnetic field cancellation when the two busbars 11 has an overlap of 100%**

| Distance between two | Percentage of magnetic field cancellation | | | | |
|---|---|---|---|---|---|
| flat wire cores 111 (H) | Sample 1 | Sample 2 | Sample 3 | Sample 4 | Sample 5 |
| 30cm | 0.0% | 0.0% | 0.0% | 0.0% | 0.0% |
| 29cm | 12.0% | 11.1% | 11.3% | 11.9% | 11.0% |
| 28cm | 18.4% | 21.7% | 25.2% | 25.4% | 23.6% |
| 27cm | 31.1% | 30.3% | 31.1% | 30.7% | 31.3% |
| 25cm | 42.4% | 42.1% | 45.1% | 41.7% | 43.3% |
| 23cm | 51.3% | 51.2% | 52.2% | 53.3% | 51.2% |
| 21cm | 59.3% | 57.1% | 58.6% | 59.3% | 60.5% |
| 19cm | 70.4% | 60.4% | 65.1% | 67.3% | 71.2% |
| 17cm | 76.7% | 76.3% | 77.1% | 76.8% | 77.9% |
| 15cm | 81.4% | 81.1% | 79.1% | 80.3% | 81.2% |
| 13cm | 86.6% | 86.7% | 89.4% | 84.8% | 83.7% |
| 11cm | 90.8% | 89.0% | 91.2% | 90.3% | 92.5% |
| 9cm | 92.8% | 91.0% | 93.0% | 93.1% | 92.8% |
| 7cm | 99.9% | 100.0% | 100.0% | 100.0% | 100.0% |
| 5cm | 100.0% | 99.8% | 100.0% | 100.0% | 99.8% |
| 3cm | 100.0% | 100.0% | 100.0% | 99.9% | 100.0% |
| 2cm | 100.0% | 99.9% | 100.0% | 99.9% | 100.0% |
| 1cm | 99.8% | 99.9% | 100.0% | 99.9% | 99.9% |

Here, the overlap means the percentage of the overlapping area of the two busbars 11 along the stacking direction to the area of one busbar 11.

As can be seen from Table 3, when the overlap of the two busbars 11 along the stacking direction is 100% and the distance H between the two flat wire cores 111 is less than or equal to 27 cm, the percentage of magnetic field cancellation is qualified, which has certain effect on preventing the electromagnetic interference. Exemplarily, when the vertical distance between the two flat wire cores 111 is less than or equal to 7 cm, the magnetic fields can be effectively cancelled by each other and the effect is obvious, so the distance H between the two flat wire cores 111 is further set as less than or equal to 7 cm.

**In** the connecting mechanism of this embodiment, the busbars 11 are stacked at a proper interval, which can effectively reduce the electromagnetic interference to other parts after the busbars 11 are energized, thereby achieving the goal of canceling the shielding device of the connection structure, and reducing the cost and weight.

In an embodiment, there are at least two of the busbars 11 which are stacked up and down and include flat wire cores 111, with an overlap of the two flat wire cores 111 along a stacking direction being 40% to 100%.

When the busbars 11 are stacked up and down, since each busbar 11 is a flat structure, the strongest magnetic field is existed in the part with a largest area, and by stacking the busbars 11, the magnetic fields of the positive and negative flat wire cores 111 can be cancelled by each other, thereby eliminating the electromagnetic interference to other electrical appliances when the busbars 11 are energized.

The distance between the busbars 11 and the overlap thereof have great influences on the degree of magnetic field cancellation. The present disclosure effectively cancels the magnetic fields of the busbars 11 by designing the two stacked busbars 11 and controlling the distance therebetween and the overlap thereof.

When the distance between the flat wire cores 111 of the two busbars 11 is 7 cm, the influence of the overlap of the two busbars 11 along the stacking direction on the magnetic field cancellation is shown in Table 4, and it is qualified when the percentage of magnetic field cancellation is greater than 30%.

**Table 4: Influence of overlapping area of the stacked busbars 11 on the magnetic field cancellation when the distance between the two flat wire cores 111 is 7 cm**

| Overlapping area of the stacked busbars (A) | Percentage of magnetic field cancellation | | | | |
|---|---|---|---|---|---|
| | Sample 1 | Sample 2 | Sample 3 | Sample 4 | Sample 5 |
| 0% | 0.0% | 0.0% | 0.0% | 0.0% | 0.0% |
| 10% | 12.3% | 12.6% | 11.8% | 12.0% | 12.9% |
| 30% | 21.5% | 20.9% | 22.5% | 24.6% | 23.4% |
| 40% | 30.1% | 30.8% | 31.1% | 31.2% | 32.3% |
| 50% | 45.8% | 43.6% | 46.9% | 48.3% | 44.6% |
| 70% | 49.8% | 50.3% | 50.8% | 51.2% | 49.9% |
| 90% | 63.1% | 60.7% | 60.1% | 61.5% | 61.9% |
| 95% | 82.1% | 81.1% | 80.9% | 80.9% | 81.6% |
| 98% | 97.3% | 97.9% | 98.3% | 97.3% | 98.3% |
| 100% | 99.9% | 100.0% | 100.0% | 100.0% | 99.9% |

As can be seen from Table 4, when the distance between the two flat wire cores 111 is 7 cm, the overlap of the busbars 11 along the stacking direction is 40% to 100%, and the percentage of magnetic field cancellation is qualified, which has certain effect on preventing the electromagnetic interference. The effect is obvious when the overlap of the two busbars 11 along the stacking direction is greater than 90%, and the effect is the best when the overlap is 100%.

According to the invention, as illustrated in FIGS. 2 and 3, the busbar 11 includes a flat wire core 111, a front end of which is connected to the flat terminal 113, and the male-end shell 12 wraps at least part of the flat terminal 113. The outer insulating layer 112 of the busbar 11 is peeled off to expose the flat wire core 111, and the flat terminal 113 is the part electrically connected to the plug-in terminal 23. By disposing the flat terminal 113, it is possible to effectively realize the plug-in connection with the plug-in terminal 23, and achieve the effective electrical connection of the connecting mechanism.

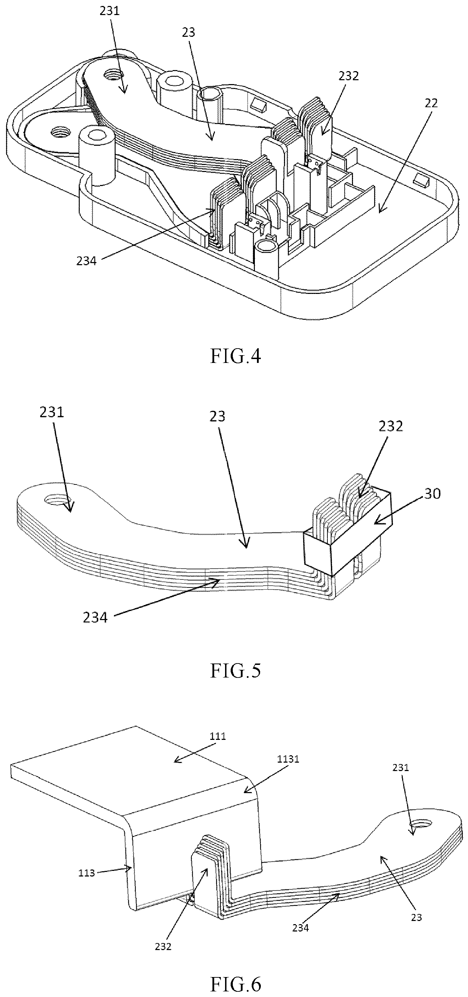

As illustrated in FIG. 6, in order to make an effective plug-in connection between the flat terminal 113 and the plug-in terminal 23, the flat terminal 113 needs to be exposed outside the male-end shell 12 during the integral molding of the busbar 11 and the male-end shell 12, so as to prevent the failure of the plug-in connection between the flat terminal 113 and the plug-in terminal 23 due to the covering of the male-end shell 12.

Exemplarily, the front end of the flat wire core 111 is connected to the flat terminal 113 by one or more of resistance welding, friction welding, ultrasonic welding, arc welding, laser welding, electron beam welding, pressure diffusion welding, magnetic induction welding, screwing, clamping, splicing and crimping.

The resistance welding refers to a method of welding by using strong current to pass through a contact point between an electrode and a workpiece and generating heat by a contact resistance. The front end of the flat wire core 111 and the conductive part of the flat terminal 113 are welded by the resistance welding.

The friction welding refers to a method of welding by taking heat generated by the friction between contact surfaces of workpieces as a heat source to plastically deform the workpieces under pressure. The front end of the flat wire core 111 and the conductive part of the flat terminal 113 are welded by the friction welding.

The ultrasonic welding is to transmit high-frequency vibration waves to the surfaces of two objects to be welded, so that under pressure, the surfaces of the two objects rub against each other to fuse molecular layers. The front end of the flat wire core 111 and the conductive part of the flat terminal 113 are welded by the ultrasonic welding.

The arc welding is to convert electrical energy into heat energy and mechanical energy required for welding by using an electric arc as a heat source and the physical phenomenon of air discharge, so as to connect metals. The arc welding mainly includes shielded metal arc welding, submerged arc welding, gas shielded welding, etc.

The laser welding is an efficient and precise welding method using a laser beam of a high energy density as a heat source.

The electron beam welding is to use accelerated and focused electron beams to bombard welding surfaces placed in vacuum or non-vacuum, so that the workpieces to be welded can be melted to realize welding.

The pressure welding is a method of applying a pressure to the workpieces to be welded to make joint surfaces closely contact and produce certain plastic deformation to complete the welding.

The diffusion welding refers to a solid-state welding method that pressurizes the workpieces at a high temperature without visible deformation and relative movement.

The magnetic induction welding means that two workpieces to be welded are subjected to instantaneous high-speed collision under the action of a strong pulse magnetic field, and the atoms of two materials meet within an inter-atomic distance under the action of high-pressure waves on the surfaces of the materials, thereby forming a stable metallurgical bonding on the interface.

The screwing refers to a threaded connection, which is a detachable connection in which a threaded piece (or the threaded part of a piece to be connected) is used to connect the piece to be connected into a whole. The conventional threaded connecting pieces include a bolt, a stud, a screw, a set screw, etc., mostly of which are standard parts.

The clamping means that the connecting end and the connecting surface are provided with a corresponding clamping claw or clamping groove, respectively, and an assembly is made by connecting the clamping groove and the clamping claw together. The clamping has the advantages of quick connection and detachability.

The splicing means that the connecting end and the connecting surface are provided with a corresponding groove and protrusion, respectively, and an assembly is made by connecting the groove and the protrusion together by means of tenoning or splicing. The splicing mode has the advantages of stable connection and detachability.

The crimping is a production process in which the connecting end and the connecting surface are assembled and then stamped into a whole using a crimping machine. The crimping has the advantage of mass production, and by adopting an automatic crimping machine, products with a stable quality can be rapidly manufactured in large quantities.

Based on the above connection modes, an appropriate connection mode or connection combination can be selected according to the actual use environment and the actual use state of the front end of the flat wire core 111 and the conductive part of the flat terminal 113, so as to realize an effective electrical connection.

According to the invention, the busbar 11 includes a flat wire core 111 which forms an integral structure with the flat terminal 113. The flat wire core 111 and the flat terminal 113 may be made of the same material, which can save the use of the flat terminal 113, reduce the material cost and the processing time, and molded the front end of the flat wire core 111 into various shapes as required without considering the assembly.

Further, the flat terminal 113 at least partially protrudes from the male-end shell 12, or the male-end shell 12 has an accommodating cavity and the flat terminal 113 at least partially protrudes from a bottom surface of the accommodating cavity without exceeding the male-end shell 12. The flat terminal 113 protrudes outside the male-end shell 12 and may be directly in a plug-in connection with the plug-in terminal 23 in the female-end shell 22, or disposed inside the accommodating cavity of the male-end shell 12, and the plug-in terminal 23 in the female-end shell 22 extends into the accommodating cavity for plug-in connection with the flat terminal 113.

Through the connection between the flat terminal 113 and the plug-in terminal 23, the flat terminal 113 of the busbar 11 realizes the terminal function itself and is directly connected to the plug-in terminal 23, which solves the problems of high cost and low efficiency of connecting a copper terminal to the busbar 11, and can realize safe and rapid plug-in or pull-out.

According to the invention, as illustrated in FIG. 3, the busbar 11 includes a flat wire core 111, and a bent portion 1131 with an angle of 0° to 180° is included between the flat wire core 111 and the flat terminal 113. The bent portion 1131 is provided at different bending angles to adapt to the connecting mechanisms with different shapes and different directions of the plug-in terminal 23. According to the mounting environment and the needs of simplifying the structure of the connecting mechanism and reducing the connecting space, the designer may set the bent portions 1131 with different angles in order to connect the plug-in terminals 23 with different angles, thereby changing the cable routings at both sides of the connecting mechanism. In addition, a main body of the busbar 11 is connected to the flat terminal 113 through the bent portions 113, and the extending direction of the flat band 11 is adjusted by the bent portion 1131, so that the flat band 11 can be adaptive to the mounting environment.

In this embodiment, the busbar 11 also has the advantage of being convenient for bending and shaping, that is, the busbar 11 can keep its shape after being bent, so as to be arranged along with the sheet metal of the vehicle body, and bent and shaped at different positions as required, thereby saving the space and facilitating the fixation.

In an embodiment, the flat terminal 113 is at least partially provided with a conductive anticorrosion layer. When the flat terminal 113 and the plug-in terminal 23 are made of different materials, the conductivity therebetween will cause an electrochemical corrosion due to a potential difference, thereby reducing the service lives of the flat terminal 113 and the plug-in terminal 23. In order to reduce the electrochemical corrosion, the flat terminal 113 may be provided with a conductive anticorrosion layer which may be made of a metal material with a potential between those of the flat terminal 113 and the plug-in terminal 23, thereby isolating the flat terminal 113 and the plug-in terminal 23, slowing down the electrochemical corrosion, and prolonging the service lives of the flat terminal 113 and the plug-in terminal 23.

In the connection between the flat terminal 113 and the plug-in terminal 23, the conductive anticorrosion layer can reduce the electrochemical reaction therebetween, and solve the technical problem that the busbar 11 can be connected to other terminals or electrical appliances only through terminals made of other materials.

Further, the conductive anticorrosion layer is attached to at least part of the surface of the flat terminal 113 by one or more of electroplating, electroless plating, magnetron sputtering, vacuum plating, pressure welding, diffusion welding, friction welding, resistance welding, ultrasonic welding or laser welding.

The electroplating is a process of plating a thin layer of other metal or alloy on a surface of some metal by using a principle of electrolysis.

The electroless plating is a deposition process in which a metal is produced through a controllable oxidation-reduction reaction under a metal catalytic action.

The magnetron sputtering is to use an interaction between a magnetic field and an electric field to make electrons move spirally near a target surface, thereby increasing the probability that the electrons bombard argon to generate ions. The generated ions bombard the target surface under the action of the electric field so as to sputter a target material.

The vacuum plating is to deposit various metal and non-metal films on the surface of a molded piece by means of distillation or sputtering under vacuum conditions.

The pressure welding is a method of applying a pressure to the workpieces to be welded to make joint surfaces closely contact and produce certain plastic deformation to complete the welding.

The friction welding refers to a method of welding by taking heat generated by the friction between contact surfaces of workpieces as a heat source to plastically deform the workpieces under pressure.

The resistance welding refers to a method of welding by using strong current to pass through a contact point between an electrode and a workpiece and generating heat by a contact resistance.

The ultrasonic welding is to transmit high-frequency vibration waves to the surfaces of two objects to be welded, so that under pressure, the surfaces of the two objects rub against each other to fuse molecular layers.

The laser welding is an efficient and precise welding method using a laser beam of a high energy density as a heat source.

The diffusion welding refers to a solid-state welding method that pressurizes the workpieces at a high temperature without visible deformation and relative movement. The conductive anticorrosion layer can be stably disposed on the surface of the flat terminal 113 by adopting one of the above modes or combinations thereof.

In an embodiment, the conductive anticorrosion layer has a thickness of 0.3 µm to 3000 µm.

In an embodiment, the conductive anticorrosion layer has a thickness of 2.5 µm to 1000 µm.

In order to test the influence of the thicknesses of different conductive anticorrosion layers on a voltage drop, the inventor adopts the plug-in parts with the same material and structure, disposes the conductive anticorrosion layers with different thicknesses on the flat terminal 113, respectively, and then tests the voltage drop after the plug-in between the flat terminal 113 and the plug-in terminal 23. The results are shown in Table 5.

In this embodiment, it is unqualified when the voltage drop after the plug-in between the flat terminal 113 and the plug-in terminal 23 is greater than 4 mV.

**Table 5. Influence of different thicknesses of conductive anticorrosion layer on the voltage drop (mV):**

| Thicknesses of conductive anticorrosion layer (µm) | | | | | | | | | | | | | | | |
|---|---|---|---|---|---|---|---|---|---|---|---|---|---|---|---|
| | 0.2 | 0.3 | 1 | 2.5 | 5 | 10 | 50 | 100 | 300 | 500 | 800 | 1000 | 2000 | 3000 | 4000 |

| Serial No. | Voltage drop after plug-in (mV) | | | | | | | | | | | | | | |
|---|---|---|---|---|---|---|---|---|---|---|---|---|---|---|---|
| 1 | 4.2 | 3.5 | 3.3 | 3.1 | 3.2 | 3.4 | 3.5 | 3.6 | 3.6 | 3.7 | 3.8 | 3.8 | 3.8 | 3.8 | 4.2 |
| 2 | 4.1 | 3.5 | 3.3 | 3.2 | 3.3 | 3.5 | 3.6 | 3.5 | 3.6 | 3.6 | 3.7 | 3.8 | 3.9 | 3.9 | 4.2 |
| 3 | 4.2 | 3.4 | 3.2 | 3.1 | 3.2 | 3.4 | 3.5 | 3.7 | 3.5 | 3.7 | 3.8 | 3.8 | 3.8 | 3.8 | 4.1 |
| 4 | 4.2 | 3.5 | 3.4 | 3.1 | 3.3 | 3.4 | 3.6 | 3.6 | 3.7 | 3.7 | 3.8 | 3.8 | 3.8 | 3.9 | 4.0 |
| 5 | 4.2 | 3.4 | 3.3 | 3.2 | 3.2 | 3.5 | 3.5 | 3.6 | 3.7 | 3.8 | 3.8 | 3.8 | 3.8 | 3.8 | 4.1 |
| 6 | 4.0 | 3.4 | 3.2 | 3.1 | 3.3 | 3.4 | 3.4 | 3.6 | 3.6 | 3.7 | 3.7 | 3.7 | 3.7 | 3.9 | 4..2 |
| 7 | 4.2 | 3.6 | 3.3 | 3.1 | 3.2 | 3.6 | 3.5 | 3.6 | 3.7 | 3.7 | 3.7 | 3.8 | 3.8 | 3.8 | 4.2 |
| 8 | 4.1 | 3.5 | 3.4 | 3.1 | 3.3 | 3.4 | 3.6 | 3.6 | 3.6 | 3.8 | 3.7 | 3.7 | 3.9 | 3.9 | 4.1 |
| 9 | 4.2 | 3.5 | 3.2 | 3.2 | 3.3 | 3.4 | 3.5 | 3.6 | 3.8 | 3.7 | 3.7 | 3.8 | 3.9 | 3.9 | 4.1 |
| 10 | 4.2 | 3.5 | 3.3 | 3.1 | 3.1 | 3.3 | 3.5 | 3.7 | 3.6 | 3.7 | 3.8 | 3.7 | 3.8 | 3.9 | 4.1 |
| Average value | 4.16 | 3.48 | 3.29 | 3.13 | 3.24 | 3.42 | 3.52 | 3.62 | 3.64 | 3.71 | 3.75 | 3.77 | 3.82 | 3.86 | 4.13 |

As can be seen from the above data, when the thickness of the conductive anticorrosion layer is greater than 3000 µm and less than 0.3 µm, the voltage drop of the plugged structure of the flat terminal 113 and the plug-in terminal 23 is greater than 4 mV, which does not meet the required value. Therefore, the inventor selects the thickness of the conductive anticorrosion layer to be 0.3 µm to 3000 µm. In which, when the thickness of the conductive anticorrosion layer is in the range of 2.5 µm to 1000 µm, the voltage drop of the plugged structure of the flat terminal 113 and the plug-in terminal 23 is an optimal value, so the inventor exemplarily selects the thickness of the conductive anticorrosion layer to be 2.5 µm to 1000 µm.

In an embodiment, the material of the conductive anticorrosion layer includes one or more of nickel, cadmium, manganese, zirconium, cobalt, tin, titanium, chromium, gold, silver, zinc, tin-lead alloy, silver-antimony alloy, palladium, palladium-nickel alloy, graphite silver, graphene silver, hard silver and silver-gold-zirconium alloy.

Exemplarily, the material of the conductive anticorrosion layer is the same as that of the battery electrode overlapped by the flat terminal 113. This solution can enhance the surface strength of the flat terminal 113 and avoid the corrosion caused by the overlapping of the flat terminal 113 with dissimilar metals.

Next, the busbar 11 is also taken as an example, and the flat terminal 113 is provided with a conductive anticorrosion layer. In order to verify the influence of different conductive anticorrosion materials on the performance of the flat terminal 113, the inventor adopts the same specification and material, and utilizes the flat terminals 113 with different conductive anticorrosion materials to carry out a series of tests on the corrosion resistance time, and the test results are shown in Table 6.

The test on the corrosion resistance time in Table 6 is to put the sample of the flat terminal 113 into a salt spray test chamber, spray salt mist onto various positions of the flat terminal 113, take out and clean the flat terminal 113 every 20 hours to observe the surface corrosions thereof, which is a cycle, stop the test when a corrosion area of the surface of the flat terminal 113 is more than 10% of a total area thereof, and then record the number of cycles at that time. **In** this embodiment, the number of cycles less than 80 is unqualified.

**Table 5: Influence of different materials of the conductive anticorrosion layer on the corrosion resistance of the sample of the flat terminal 113**

| Different materials of the conductive anticorrosion layer | | | | | | | | | |
|---|---|---|---|---|---|---|---|---|---|
| Nickel | Cadmium | Manganese | Zirconium | Cobalt | Tin | Titanium | Zinc | Chrome | |

| Number of cycles of corrosion resistance tests | | | | | | | | | |
|---|---|---|---|---|---|---|---|---|---|
| 86 | 128 | 119 | 129 | 128 | 85 | 122 | 85 | 109 | |
| | | | | | | | | | |

| Different materials of the conductive anticorrosion layer | | | | | | | | | |
|---|---|---|---|---|---|---|---|---|---|
| Gold | Silver | Silver-antimony alloy | Graphite silver | Graphene silver | Silver-gold-zirconium alloy | Palladium | Palladium-nickel alloy | Tin-lead alloy | Hard silver |

| Number of cycles of corrosion resistance tests | | | | | | | | | |
|---|---|---|---|---|---|---|---|---|---|
| 135 | 129 | 123 | 136 | 128 | 134 | 112 | 122 | 115 | 138 |

As can be seen from Table 6, when the material of the conductive anticorrosion layer includes conventional metals such as tin, nickel and zinc, the test results are not as good as those of other metals, because the test results of other metals far exceed the standard values, and the performances are stable. Therefore, the inventor selects that the material of the conductive anticorrosion layer includes (or is) one or more of nickel, cadmium, manganese, zirconium, cobalt, tin titanium, chromium, gold, silver, zinc-tin-lead alloy, silver-antimony alloy, palladium, palladium-nickel alloy, graphite silver, graphene silver, hard silver and silver-gold-zirconium alloy. More exemplarily, the material of the conductive anticorrosion layer includes one or more of cadmium, manganese, zirconium, cobalt, titanium, chromium, gold, silver, tin-lead alloy, silver-antimony alloy, palladium, palladium-nickel alloy, graphite silver, graphene silver, hard silver and silver-gold-zirconium alloy.

In an embodiment, an end of the flat terminal 113 is provided with a chamfer. During processing and mounting of the busbar 11, there will be an assembly error when the plug-in terminal 23 is mounted. At this time, there will also be a large assembly error when the flat terminal 113 is assembled with the plug-in terminal 23. In order to conveniently and accurately make a plug-in connection between the flat terminal 113 and the plug-in terminal 23, it is necessary to provide a chamfer at the end of the flat terminal 113 for guidance when the flat terminal 113 is plugged with the plug-in terminal 23.

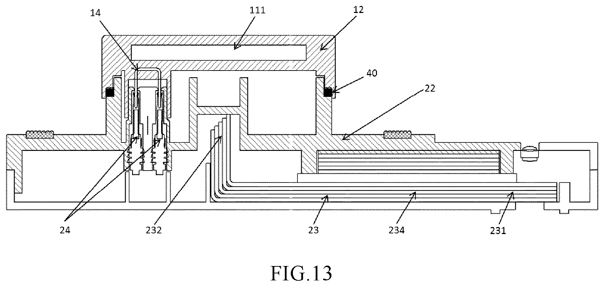

In an embodiment, as illustrated in FIGS. 7 and 13, the male-end connecting mechanism 10 includes an interlocking connector 14, which is at least partially integrally injection-molded in the male-end shell 12. High-voltage interlocking is a safety design method to monitor the integrity of a high-voltage loop with a low-voltage signal. Different projects have different designs for the implementation of the high-voltage interlocking. The high-voltage interlocking is to monitor the accidental disconnection of the high-voltage loop to avoid the damage to the automobile due to the sudden loss of power. In the high-voltage interlocking of this embodiment, an interlocking connector 14 is located at one end of a high-voltage interlock structure 24 in FIG. 13, and it is a U-shaped or V-shaped low-voltage loop with two plug-in pins electrically connected to each other. The interlocking connector 14 does not need to be mounted, but may be directly formed in the male-end shell 12 by means of integral injection-molding, and in matched connection with the high-voltage interlock structure 24 in the female-end connecting mechanism 20 to form a low-voltage monitoring loop. When the connecting mechanism in this embodiment is accidentally disconnected, the interlocking connector 14 and the high-voltage interlock structure 24 are disconnected at the same time, and the low-voltage monitoring loop gives an alarm to a central control system, so as to prevent the automobile from being damaged due to the sudden loss of power.

According to the invention, as illustrated in FIG. 5, the plug-in terminal 23 includes a fixing portion 231 and a wire clamping portion 232. The female-end connecting mechanism 20 further includes a cable 21. The fixing portion 231 is electrically connected to a conductive part at a front end of the cable 21, and the wire clamping portion 232 is electrically connected to the flat terminal 113. The wire clamping portion 232 of the plug-in terminal 23 is in plug-in connection with the flat terminal 113 to realize an electrical connection, so that a loop can be conducted between the busbar 11 and the cable 21.

Further, the fixing portion 231 and the conductive part at the front end of the cable 21 are connected by one or more of resistance welding, friction welding, ultrasonic welding, arc welding, laser welding, electron beam welding, pressure diffusion welding, magnetic induction welding, screwing, clamping, splicing and crimping.

The resistance welding refers to a method of welding by using strong current to pass through a contact point between an electrode and a workpiece and generating heat by a contact resistance. The fixing portion 231 and the conductive part of the cable 21 are welded by the resistance welding.

The friction welding refers to a method of welding by taking heat generated by the friction between contact surfaces of workpieces as a heat source to plastically deform the workpieces under pressure. The fixing portion 231 and the conductive part of the cable 21 are welded by the friction welding.

The ultrasonic welding is to transmit high-frequency vibration waves to the surfaces of two objects to be welded, so that under pressure, the surfaces of the two objects rub against each other to fuse molecular layers. The fixing portion 231 and the conductive part of the cable 21 are welded by the ultrasonic welding.

The arc welding is to convert electrical energy into heat energy and mechanical energy required for welding by using an electric arc as a heat source and the physical phenomenon of air discharge, so as to connect metals. The arc welding mainly includes shielded metal arc welding, submerged arc welding, gas shielded welding, etc.

The laser welding is an efficient and precise welding method using a laser beam of a high energy density as a heat source.

The electron beam welding is to use accelerated and focused electron beams to bombard welding surfaces placed in vacuum or non-vacuum, so that the workpieces to be welded can be melted to realize welding.

The pressure welding is a method of applying a pressure to the workpieces to be welded to make joint surfaces closely contact and produce certain plastic deformation to complete the welding.

The diffusion welding refers to a solid-state welding method that pressurizes the workpieces at a high temperature without visible deformation and relative movement.

The magnetic induction welding means that two workpieces to be welded are subjected to instantaneous high-speed collision under the action of a strong pulse magnetic field, and the atoms of two materials meet within an inter-atomic distance under the action of high-pressure waves on the surfaces of the materials, thereby forming a stable metallurgical bonding on the interface. The magnetic induction welding is a kind of solid-state cold welding, and can weld together the fixing portion 231 and the conductive part of the cable 21 which have similar or dissimilar properties.

The screwing refers to a threaded connection, which is a detachable connection in which a threaded piece (or the threaded part of a piece to be connected) is used to connect the piece to be connected into a whole. The conventional threaded connecting pieces include a bolt, a stud, a screw, a set screw, etc., mostly of which are standard parts.

The clamping means that the connecting end and the connecting surface are provided with a corresponding clamping claw or clamping groove, respectively, and an assembly is made by connecting the clamping groove and the clamping claw together. The clamping has the advantages of quick connection and detachability.

The splicing means that the connecting end and the connecting surface are provided with a corresponding groove and protrusion, respectively, and an assembly is made by connecting the groove and the protrusion together by means of tenoning or splicing. The splicing mode has the advantages of stable connection and detachability.

The crimping is a production process in which the connecting end and the connecting surface are assembled and then stamped into a whole using a crimping machine. The crimping has the advantage of mass production, and by adopting an automatic crimping machine, products with a stable quality can be rapidly manufactured in large quantities.

Based on the above connection modes, an appropriate connection mode or connection combination can be selected according to the actual use environment and the actual use state of the fixing portion 231 and the conductive part of the cable 21, so as to realize an effective electrical connection.

In some embodiments, the wire clamping portion 232 is sleeved by a clip 30 as illustrated in FIG. 12, and the clip 30 is made of a memory alloy. The clip 30 can clamp the wire clamping portion 232. The memory alloy is an intelligent metal with a memory, and its microstructure has two relatively stable states; the memory alloy may be changed into any desired shape at a high temperature and may be stretched at a low temperature; when being reheated, the memory alloy will remember its original shape and change back; the memory alloy have different crystal structures above and below its transformation temperature, and when the temperature changes around the transformation temperature, the memory alloy contracts or expands, thereby causing a change of its morphology. **In** some embodiments, the memory alloy is a nickel-titanium alloy.

Further, the transformation temperature of the memory alloy is set in a range of 40°Cto 70°C. When the temperature of the clip 30 is lower than the transformation temperature, the clip 30 is in an expanded state, and when the temperature of the clip 30 is higher than the transformation temperature, the clip 30 is in a clamped state.

In general, the transformation temperature is selected as between 40°C and 70°C, because if the transformation temperature is lower than 40°C, the ambient temperature of the wire clamping portion 232 and the clip 30 will reach nearly 40°C without current conduction. At this time, the clip 30 is in a clamped state, the gap between the wire clamping portion 232 decreases, and the flat terminal 113 cannot be plugged into the wire clamping portion 232. As a result, the flat terminal 113 cannot be plugged with the wire clamping portion 232, and works cannot be carried out.

In some embodiments, the wire clamping portion 232 is sleeved by a clip 30, which includes a sidewall 31, and an elastic unit 32 fixed on the sidewall 31 and in contacted connection with an outer side of the wire clamping portion 232.

The clip 30 applies a pressure to the wire clamping portion 232 through the elastic unit 32 disposed on the sidewall, so that the strip groove of the wire clamping portion 232 can better clamp the flat terminal 113 of the busbar 11, ensure the contact area between the wire clamping portion 232 and the flat terminal 113, reduce the contact resistance and improve the conductivity.

By disposing the clip 30, it is possible to ensure the tight connection between the wire clamping portion 232 and the flat terminal 113.

Further, the pressure applied to the wire clamping portion 232 by the elastic unit 32 ranges from 3 N to 200 N.

In order to verify the influence of the pressure applied to the wire clamping portion 232 by the elastic unit 32 on the contact resistance and the plug-in or pull-out condition after the plug-in of the flat terminal 113 with a large eccentricity, the inventor selects the flat wire core 111 and the wire clamping part 232 with the same size, and different elastic units 32 to apply pressures to the wire clamping portion 232. Then, the inventor selects the flat terminal 113 with the same eccentricity to be plugged with the wire clamping portion 232, and tests the contact resistance between the terminals after plug-in and the plug-in success rate of the flat terminal 113 in multiple plug-in or pull-out experiments. The test results are shown in Table 7.

The test method of the contact resistance is to adopt a micro-resistance measuring instrument, in which one end of a measuring part of the micro-resistance measuring instrument is placed on the flat terminal 113 and the other end thereof is placed on the wire clamping portion 232, with the same position for each measurement, and then read the value of the contact resistance on the micro-resistance measuring instrument. In this embodiment, the contact resistance greater than 1 mΩ is unqualified.

The test method of the plug-in success rate is to apply a pressure by each of the elastic units 32 to the wire clamping portion 232 for plug-in with 100 flat terminals 113 with the same eccentricity, record the number of successful one-time plug-in, take a ratio of the above number to a total number of plug-in and multiply the ratio by 100%. In this embodiment, the plug-in success rate less than 95% is unqualified.

**Table 7: Influence of different pressures on the contact resistance and the plug-in success rate**

| Pressure applied by the elastic unit to the wire clamping portion 232 (N) | | | | | | | | | | | | | | | |
|---|---|---|---|---|---|---|---|---|---|---|---|---|---|---|---|
| 1 | 3 | 8 | 20 | 40 | 60 | 80 | 100 | 120 | 140 | 160 | 180 | 200 | 200 | 240 | 260 |

| Contact resistance between the flat terminal 113 and the wire clamping portion 232 (mΩ) | | | | | | | | | | | | | | | |
|---|---|---|---|---|---|---|---|---|---|---|---|---|---|---|---|
| 1.22 | 0.99 | 0.98 | 0.90 | 0.88 | 0.84 | 0.81 | 0.77 | 0.72 | 0.68 | 0.63 | 0.58 | 0.52 | 0.49 | 0.45 | 0.43 |

| Plug-in success rate of the flat terminal 113 and the wire clamping portion 232 (%) | | | | | | | | | | | | | | | |
|---|---|---|---|---|---|---|---|---|---|---|---|---|---|---|---|
| 100 | 100 | 100 | 100 | 100 | 100 | 100 | 99 | 97 | 96 | 96 | 95 | 95 | 95 | 89 | 86 |

As can be seen from Table 7, when the pressure applied to the wire clamping portion 232 by the elastic unit 32 is less than 3 N, although the plug-in success rate is qualified, the contact resistance between the plug-in terminal 23 and the wire clamping portion 232 is greater than 1 mΩ, which is too large. When the pressure applied to the wire clamping portion 232 by the elastic unit 32 is greater than 200 N, the plug-in success rate is less than 95%, which cannot meet the application requirement. Therefore, the inventor sets the pressure applied to the wire clamping portion 232 by the elastic unit 32 as 3 N to 200 N.

Further, the elastic unit 32 is an elastic rubber body, a spring or a metal elastic sheet. When the elastic unit 32 is an elastic rubber body, the pressure applied to the wire clamping portion 232 is ensured by an elastic force generated by the compression of the elastic rubber body. When the elastic unit 32 is a compression spring, the pressure applied to the wire clamping portion 232 is ensured by an elastic force generated by the compression of the compression spring. When the elastic unit 32 is a metal elastic sheet, it is integrally formed with the clip 30, and may be in the form of a single-ended elastic sheet in which one end is fixed and the other end is free, or in the form of a double-ended elastic sheet in which both ends are fixed and the middle is convex, so that the pressure applied to the wire clamping portion 232 can be ensured by the elastic force of the metal elastic sheet itself.

According to the invention, the wire clamping portion 232 of the plug-in terminal 23 is formed by stacking a plurality of sheet terminals 234, and grooves are formed in the sheet terminals 234 for plug-in connection with the busbar 11. The flat terminal 113 can be plugged into the groove and electrically connected to the wire clamping portion 232. The flat terminal 113 of the busbar 11 is clamped by the groove, so that the busbar 11 and the plug-in terminal 23 are fixed together with a large contact area therebetween, thereby ensuring the reliability of electrical connection. By adjusting the width of the groove or the number of the sheet terminals 234, the clamping force can be controlled to facilitate the adaption to the flat terminal 113 and meet various plug-in requirements.

As illustrated in FIG. 5, the plug-in terminal 23 is composed of a plurality of sheet terminals 234 which are stacked. The sheet terminals 234 are easy to be deformed and can be plugged with the flat terminal 113 of the busbar 11. The flat terminal 113 of the busbar 11 is in contact with the grooves of the sheet terminals 234 to realize an electrical connection, thereby ensuring the stability of the connection between the plug-in terminal 23 and the busbar 11.

Specifically, the wire clamping portion 232 is formed by stacking a plurality of sheet terminals 234 in which grooves are formed and plugged with the flat terminal 113 of the busbar 11 to realize an electrical connection.

In some embodiments, a gap between adjacent two of the sheet terminals 234 is less than 0.2 mm. The gap is provided between two sheet terminals 234 for the purpose of circulating air between the sheet terminals 234, so as to reduce the temperature rise between the flat terminal 113 and the plug-in terminal 23, protect the conductive anticorrosion layer of the flat terminal 113, prolong the service life of the flat terminal 113, and ensure the plug-in force between the flat terminal 113 and the plug-in terminal 23. When the gap is greater than 0.2 mm, the heat dissipation function is not improved, and a large with is occupied by the plug-in terminal 23 with the same contact area, resulting in a waste of the use space.

In some embodiments, at least part of the material of the sheet terminal 234 is a memory alloy. As mentioned above, the memory alloy is an intelligent metal with a memory, and its microstructure has two relatively stable states; the memory alloy may be changed into any desired shape at a high temperature and may be stretched at a low temperature; when being reheated, the memory alloy will remember its original shape and change back; the memory alloy have different crystal structures above and below its transformation temperature, and when the temperature changes around the transformation temperature, the memory alloy contracts or expands, thereby causing a change of its morphology. In some embodiments, the memory alloy is a nickel-titanium alloy.

Further, the transformation temperature of the memory alloy is set in a range of 40°C to 70°C. When the temperature of the sheet terminal 234 is lower than the transformation temperature, the grooves are in an expanded state, and when the temperature of the sheet terminal 234 is higher than the transformation temperature, the grooves are in a clamped state.

In general, the transformation temperature is selected as between 40°C and 70°C, because if the transformation temperature is lower than 40°C, the ambient temperature of the plug-in terminal 23 reach nearly 40°C without current conduction. At this time, the plurality of sheet terminals 234 are in a clamped state, the size of the groove of the plug-in terminal 23 decreases, and the flat terminal 113 cannot be plugged into the plug-in terminal 23. As a result, the flat terminal 113 cannot be plugged with the plug-in terminal 23, and works cannot be carried out.

At the room temperature, current is conducted after the flat terminal 113 is plugged with the plug-in terminal 23. Because when the plug-in starts, the plurality of sheet terminals 234 are in an expanded state, the contact area between the flat terminal 113 and the plug-in terminal 23 is small and the current is large, which leads to the temperature rise of the sheet terminals 234 after plug-in. However, if the transformation temperature is higher than 70°C, the temperature rise of the plug-in terminal 23 takes a long time. When the plugged structure of the flat terminal 113 and the plug-in terminal 23 is under the large current for a long time, electrical aging will be easily caused, and in severe cases, the plugged structure of the flat terminal 113 and the plug-in terminal 23 will be overloaded and damaged, resulting in unnecessary losses.

Therefore, the transformation temperature of the memory alloy is generally set between 40°C and 70°C.

The plug-in terminal 23 has a memory function. The groove of the plug-in terminal 23 is generally in an expanded state below the transformation temperature. At this time, the flat terminal 113 of the busbar 11 can be plugged without an insertion force, so that the operator can easily plug the electrical appliances. During operation, current is conducted to the plug-in terminal 23, and the temperature thereof gradually increases due to the effect of resistance. When the temperature rises above the transformation temperature, the groove of the plug-in terminal 23 will contract radially, so that the contact area and the contact force between the groove of the plug-in terminal 23 and the flat terminal 113 of the busbar 11 can be increased by the temperature rise, and then the contact reliability can be improved. Since the insertion force is omitted, the work is easier and the working efficiency is improved.

In an embodiment, the female-end shell 22 is integrally injection-molded on the periphery of at least part of the plug-in terminal 23 to form an insulating structure. In this embodiment, the connecting mechanism is provided with the injection-molded female-end shell 22, which is simple in processing and low in cost and can be directly injected outside the plug-in terminal 23 for insulation.

In an embodiment, the female-end connecting mechanism 20 further includes a cable 21 electrically connected to the plug-in terminal 23, the plug-in terminal 23 and at least part of the cable 21 are disposed in the female-end shell 22, and the plug-in terminal 23 is at least partially exposed outside the female-end shell 22. Through the cable 21 connected to the plug-in terminal 23 and the electrical connection between the plug-in terminal 23 and the flat terminal 113, the busbar 11 may be electrically connected to the cable 21 to conduct a loop, thereby achieving current conduction.

In an embodiment, the wire clamping portion 232 at least partially protrudes from an outer wall of the female-end shell 22, or the female-end shell 22 is provided with an opening boss where the wire clamping portion 232 is at least partially disposed. In the above embodiment, the flat terminal 113 protrudes from the male-end shell 12, and may be in plug-in connection with the wire clamping portion 232 disposed in the opening boss. Alternatively, the male-end shell 12 has a groove, and the flat terminal 113 protrudes from a bottom surface of the groove without exceeding the male-end shell 12, and may be in plug-in connection with the wire clamping portion 232 protruding from the outer wall of the female-end shell 22.

In an embodiment, as illustrated in FIG. 8, the female-end connecting mechanism 20 includes a high-voltage interlock structure 24, which is electrically connected to the interlocking connector 14 to form a loop. High-voltage interlocking is a safety design method to monitor the integrity of a high-voltage loop with a low-voltage signal. The high-voltage interlocking is to monitor the accidental disconnection of the high-voltage loop to avoid the damage to the automobile due to the sudden loss of power. In the high-voltage interlocking of this embodiment, an interlocking connector 14 is located at one end of the high-voltage interlock structure 24 in FIG. 13, and it is a U-shaped or V-shaped low-voltage loop with two plug-in pins electrically connected to each other; the other end of the high-voltage interlock structure 24 is disposed in the female-end connecting mechanism 20 to connect two plug-in terminals of the low-voltage loop. The plug-in terminal of the high-voltage interlock structure 24 is in matched connection with the plug-in pins of the interlocking connector 14 to form a low-voltage monitoring loop. When the connecting mechanism in this embodiment is accidentally disconnected, the interlocking connector 14 and the high-voltage interlock structure 24 are disconnected at the same time, and the low-voltage monitoring loop gives an alarm to ae central control system, so as to prevent the automobile from being damaged due to the sudden loss of power.

The embedded high-voltage interlock structure 24 replaces the previous assembled high-voltage interlock structure, and is fixed in the connector by integral injection-molding without assembling, so that the cost is reduced and the high-voltage interlocking effect is completely satisfied.

In an embodiment, the female-end connecting mechanism 20 and/or the male-end connecting mechanism 10 has a sealing structure 40, which can seal the flat terminal 113, the plug-in terminal 23, a part of the busbar 11 and the cable 21 into the connecting mechanism, so as to prevent the external dust and moisture from damaging and corroding the internal conductive mechanism, and greatly prolong the service life of the connecting mechanism.

Further, the sealing structure 40 is secondary injection-molded on the female-end shell 22 and/or the male-end shell 12. The sealing structure 40 of the connecting mechanism is no longer a separate seal ring, but adopts a secondary injection-molded sealing structure 40 to replace the traditional seal ring, so as to be directly molded on the connecting mechanism, thereby achieving a better injection bonding and a lower cost.

Further, the sealing structure 40 is made of rubber, soft glue or silica gel. These materials can be heated and melted by an injection molding machine and injected into a corresponding mold for molding, so that the processing is simple and the bonding is firm, and the service life of the sealing structure 40 can be greatly prolonged. In addition, these materials have good elasticity and be extruded and deformed during the assembly of the connecting mechanism, so as to fill the gap and achieve a good sealing performance. Moreover, these materials are water-resistant and oil-resistant, thereby ensuring a long service life and a safe sealing performance of the sealing structure 40.

Further, a maximum gap between the sealing structure 40 and the male-end connecting mechanism 10 and/or the female-end connecting mechanism 20 is less than 520 nm.

**In** order to verify the influence of the gap between each sealing structure 40 and the adjacent device on the sealing grade, the inventor adopts a dry air method to test the sealing device. By vacuuming or air pressurization, the internal and external pressures of the tested sample are controlled to be different, and the difference between the internal and external pressures will decrease if there is a leakage, so that the sealability can be detected by detecting the change of the air pressure. The detection medium is dry air, which is nontoxic and harmless without damaging the tested sample, and the detection environment is clean and tidy. For example, in the detection of the sealing structure 40 disposed on the male-end connecting mechanism, the inventor completely seals other joints after the connection between the male-end connecting mechanism 10 and the female-end connecting mechanism 20, selects the sealing structures 40 with different sealing degrees and partially extracts the dry air therein, so that the air pressure in the sealing structure 40 is lower than the external air pressure, and continuously detects the air pressure in the sealing structure 40. It is unqualified when the air pressure increases, and the test results are shown in Table 8.

**Table 8: Influence of the maximum gap between the sealing structure 40 and the male-end connecting mechanism 10 and/or the female-end connecting mechanism 20 on the change of the air pressure**

| | | | | | | | | | |
|---|---|---|---|---|---|---|---|---|---|
| Maximum gap (nm) | 530 | 520 | 500 | 450 | 400 | 350 | 300 | 280 | 260 |
| Whether the air pressure changes | Yes | No | No | No | No | No | No | No | No |

As can be seen from Table 8, when the maximum gap between the sealing structure 40 and the male-end connecting mechanism 10 and/or the female-end connecting mechanism 20 exceeds 520 nm, the air pressure changes, which means that air enters the sealing structure 40 and the test result is unqualified. Therefore, the inventor selects the maximum gap between the sealing structure 40 and the male-end connecting mechanism 10 and/or the female-end connecting mechanism 20 to be not less than 520 nm.

In an embodiment, the female-end connecting mechanism 20 and/or the male terminal connecting mechanism 10 has at least one temperature measuring structure for measuring the temperature of the plug-in terminal 23 and/or the busbar 11 and/or the flat terminal 113. The temperature measuring structure may be at a distance from the plug-in terminal 23 and/or the busbar 11. The heat radiation is transmitted to the temperature measuring structure from the plug-in terminal 23 and/or the busbar 11, and then the temperature of the plug-in terminal 23 and/or the busbar 11 is measured by the temperature measuring mechanism; or the temperature measuring structure includes a conductive element attached to the plug-in terminal 23 and/or the busbar 11, the temperature of the plug-in terminal 23 and/or the busbar 11 is measured from the temperature transmitted by the conductive element, and the measured temperature is transmitted to the control system, so as to adjust the current passing through the plug-in terminal 23 and/or the flat band 11, thereby adjusting the temperature of the female-end connecting mechanism 20 or the or the male-end connecting mechanism 10.

Further, the temperature measuring structure is attached to the plug-in terminal 23 and/or the busbar 11 and/or the flat terminal 113 to measure the temperature thereof. The temperature measuring structure is a temperature sensor, which is directly attached to the plug-in terminal 23 and/or the busbar 11 and/or the flat terminal 113, thereby directly obtaining the actual temperature thereof without calculation. The structure is simple and the temperature measurement is more accurate.

In an embodiment, the male-end connecting mechanism 10 has at least one temperature measuring structure, and there are at least two of the busbars 11 with the temperature measuring structure therebetween to measure the temperatures thereof. By placing the temperature measuring structure between the busbars 11, it is possible to obtain the heat conducted by the busbars 11 simultaneously and balance the heating quantities of the busbars 11, which not only saves the number of the temperature measuring structures, but also directly obtains the highest temperature of the busbars 11, thereby well controlling the temperatures of the busbars 11.

The temperature measuring structure may be a temperature sensor, which may be an NTC temperature sensor or a PTC temperature sensor, so as to timely and accurately monitor the temperature of the male-end connecting mechanism 10 or the female-end connecting mechanism 20.

The temperature sensor is an NTC temperature sensor or a PTC temperature sensor. These two temperature sensors are advantageous in that they are small in size and can measure gaps that cannot be measured by other thermometers; the usage of NTC temperature sensor or a PTC temperature sensor is convenient, and the resistance value can be arbitrarily selected between 0.1 kΩ and 100 kΩ; and the temperature sensors are easy to be processed into complex shapes, can be produced in large quantities, have good stability and strong overload capacity, and are suitable for products such as adapters requiring small sizes and stable performances.

By adopting the temperature measuring structure, it is possible to separately monitor the terminal temperature inside the connecting mechanism, and avoid the situation that the temperature of the connecting mechanism cannot be monitored due to the damage of the temperature sensors in other positions.

Further, the male-end connecting mechanism 10 and the female-end connecting mechanism 20 are connected by one or more of adhesive connection, magnetic connection, bayonet connection, plug-in connection, latching connection, binding connection, threaded connection, riveting connection and welding connection.

In a first feasible technical solution, an adhesive structure may be adopted. For example, mating surface of the male-end connecting mechanism 10 and mating surface of the female-end connecting mechanism 20 are respectively provided with adhesive layers, which are fixedly connected by adhesive.

In a second feasible technical solution, a magnetic attraction structure may be adopted. For example, mating surface of the male-end connecting mechanism 10 and the female-end connecting mechanism 20 are respectively provided with magnetic attraction parts, so that the connection is convenient and quick.

In a third feasible technical solution, a plugged structure may be adopted. The shell of the male-end connecting mechanism 10 is provided with a pin, and the shell of the female-end connecting mechanism 20 is provided with a slot. The pin is inserted into the slot to achieve a fixed connection, so that the male-end connecting mechanism 10 and the female-end connecting mechanism 20 are fixedly connected.

In a fourth feasible technical solution, a clamping structure may be adopted. For example, the male-end shielding shell of the male-end connecting mechanism 10 is provided with a buckle, and the female-end shielding shell of the female-end connecting mechanism 20 is provided with a clamping groove. The buckle is engaged with the clamping groove to achieve a fixed connection, so that the male-end connecting mechanism 10 and the female-end connecting mechanism 20 are fixedly connected.

In a fifth feasible technical solution, a bolted connection structure may be adopted, which includes a bolt and a nut, in which the bolt is fixed on the surface to be spliced of the male-end connecting mechanism 10, and the nut is disposed on the surface to be spliced of the female-end connecting mechanism 20 and is rotatable. After the bolt and the nut are screwed and tightened, mating surface of the male-end connecting mechanism 10 and the female-end connecting mechanism 20 are fixedly connected. The bolted connection structure adopts the bolt and the nut with the minimum size of M3, and the minimum torque is 0.2 N·m when the bolted connection structure is tightened.

In a sixth feasible technical solution, a riveting structure may be adopted which includes a rivet and fixing holes, in which the fixing holes are disposed on mating surface of the male-end connecting mechanism 10 and the female-end connecting mechanism 20, and the rivet is allowed to pass through the fixing holes and then deformed to tighten the fixing holes, so that mating surface of the male-end connecting mechanism 10 and the female-end connecting mechanism 20 are fixedly connected.

In a seventh feasible technical solution, a welding structure may be adopted. For example, welding pieces are disposed on mating surface of the male-end connecting mechanism 10 and the female-end connecting mechanism 20, and a welding machine is adopted to melt and connect the welding pieces together, so that mating surface of the male-end connecting mechanism 10 and the female-end connecting mechanism 20 are fixedly connected. The welding machine includes a hot melt welding machine and an ultrasonic welding machine.

In an eighth feasible technical solution, a binding structure may be adopted which includes a binding piece, in which grooves are formed on the surfaces of the male-end connecting mechanism 10 and the female-end connecting mechanism 20, and the binding piece is adopted to bind mating surface of the male-end connecting mechanism 10 and the female-end connecting mechanism 20 together at the positions of the grooves, so that mating surface of the male-end connecting mechanism 10 and the female-end connecting mechanism 20 are fixedly connected. The binding piece includes a strapping tape, a pipe collar, a hook lock, etc.

In a ninth feasible technical solution, a latching structure may be adopted which includes a latching piece disposed on mating surface of the male-end connecting mechanism 10 and the female-end connecting mechanism 20 or an adjacent surface, so that mating surface of the male-end connecting mechanism 10 and the female-end connecting mechanism 20 are fixedly connected through the latching piece.

In an embodiment, the plug-in terminal 23 includes a wire clamping portion 232, the flat terminal 113 is plugged with the wire clamping portion 232 to form an electrical connection, and a plug-in force between the flat terminal 113 and the wire clamping portion 232 is between 3 N and 150 N.

In order to verify the influence of the plug-in force between the flat terminal 113 and the wire clamping portion 232 on the contact resistance and the plug-in situation between the busbar 11 and the plug-in terminal 23, the inventor selects the busbar 11 and the plug-in terminal 23 with the same shape and size, and designs different plug-in forces between the busbar 11 and the plug-in terminal 23, so as to observe the contact resistance between the busbar 11 and the plug-in terminal 23 and the situation after repeated plug-in.

The test method of the contact resistance is to adopt a micro-resistance measuring instrument to measure the resistance at the contact position between the flat terminal 113 and the wire clamping portion 232, and read the value on the micro-resistance measuring instrument as the contact resistance between the flat terminal 113 and the wire clamping portion 232. In this embodiment, the contact resistance less than 50 µΩ is an ideal value.

The test method of the plug-in situation between the flat terminal 113 and the wire clamping portion 232 is to plug the flat terminal 113 and the wire clamping portion 232 for 50 times, and thereafter observe the numbers of times of dropping and the situation that plug-in or pull-out are impossible. The number of times of dropping after plug-in or pull-out is required to be less than 3, and the number of times of the situation that plug-in or pull-out are impossible is required to be less than 5.

**Table 9: Influence of different plug-in forces between the flat terminal 113 and the wire clamping portion 232 on the contact resistance and the plug-in situation**

| Plug-in force between the flat terminal 113 and the wire clamping portion 232 (N) | | | | | | | | | | | | | |
|---|---|---|---|---|---|---|---|---|---|---|---|---|---|
| 1 | 3 | 5 | 10 | 25 | 35 | 45 | 55 | 65 | 75 | 95 | 130 | 150 | 155 |

| Contact resistance (µΩ) | | | | | | | | | | | | | |
|---|---|---|---|---|---|---|---|---|---|---|---|---|---|
| 62 | 49 | 48 | 43 | 37 | 35 | 31 | 26 | 22 | 17 | 15 | 10 | 8 | 6 |

| Number of times of dropping after plug-in or pull-out | | | | | | | | | | | | | |
|---|---|---|---|---|---|---|---|---|---|---|---|---|---|
| 5 | 2 | 1 | 0 | 0 | 0 | 0 | 0 | 0 | 0 | 0 | 0 | 0 | 0 |

| Number of times of the situation that plug-in or pull-out are impossible | | | | | | | | | | | | | |
|---|---|---|---|---|---|---|---|---|---|---|---|---|---|
| 0 | 0 | 0 | 0 | 0 | 0 | 0 | 0 | 0 | 0 | 0 | 1 | 3 | 6 |

As can be seen from Table 9, when the plug-in force between the flat terminal 113 and the wire clamping portion 232 is less than 3 N, the contact resistance between the flat terminal 113 and the wire clamping portion 232 is higher than the ideal value because the bonding force therebetween is too small, and at the same time, the number of times of dropping after plug-in or pull-out exceeds 3, which is unqualified. When the plug-in force between the flat terminal 113 and the wire clamping portion 232 is greater than 150 N, the number of times of the situation that plug-in or pull-out are impossible between the flat terminal 113 and the wire clamping portion 232 is greater than 5, which is also unqualified. Therefore, the inventor sets the plug-in force between the flat terminal 113 and the wire clamping portion 232 to be between 3 N and 150 N.

As can be seen from Table 9, when the plug-in force between the flat terminal 113 and the wire clamping portion 232 is between 10 N and 130 N, there is neither dropping after plug-in or pull-out nor the situation that plug-in or pull-out are impossible, and the contact resistance is also within the range of the ideal value. Therefore, the inventor sets that the plug-in force between the flat terminal 113 and the wire clamping portion 232 is exemplarily between 10 N and 135 N.

In an embodiment, the contact resistance between the flat terminal 113 and the plug-in terminal 23 is less than 9 mΩ. Exemplarily, the contact resistance between the flat terminal 113 and the plug-in terminal 23 is less than 1 mΩ. Generally, large current needs to be conducted between the flat terminal 113 and the plug-in terminal 23. If the contact resistance between the flat terminal 113 and the plug-in terminal 23 is greater than 9 mΩ, a large temperature rise will occur at the contact position, and the temperature will be increasingly higher with the elapse of time. When the temperature between the flat terminal 113 and the plug-in terminal 23 is too high, the mechanical deformation of the conductive anticorrosion layer is asynchronous with that of the flat terminal 113 due to different materials and different thermal expansion rates, and the mechanical deformation of the plug-in terminal 23 is asynchronous with that of the terminal plating layer due to the same reason, resulting in internal stress between the conductive anticorrosion layer and the flat terminal 113 and between the plug-in terminal 23 and the terminal plating layer. In severe cases, the conductive anticorrosion layer and the terminal plating layer will fall off, and the protection effect cannot be achieved. In addition, the excessive temperature between the flat terminal 113 and the plug-in terminal 23 might be transferred to the insulating layer of the busbar 11 and the insulating layer of the wire connected to the plug-in terminal 23, resulting in the melting of the corresponding insulating layers, and the effect of insulative protection cannot be achieved. In serious cases, short circuit of the lines may be caused, resulting in damage to the connection structure, and even burning and other safety accidents. Therefore, the inventor sets the contact resistance between the flat terminal 113 and the plug-in terminal 23 to be less than 9 mΩ.

In order to verify the influence of the contact resistance between the flat terminal 113 and the plug-in terminal 23 on the temperature rise and the conductivity of the connecting mechanism, the inventor selects the same busbar 11 and the plug-in terminals 23 with different contact resistances, and tests the conductivity and the temperature rise of the plugged structure.

The test on the conductivity is to check the conductivity at the corresponding plugged position after the flat terminal 113 is plugged with the plug-in terminal 23 and the plugged structure is energized. In this embodiment, the conductivity greater than 99% is an ideal value.

The test on the temperature rise is to supply the same power to the plugged structure, detect the temperatures of the flat terminal 113 and the plug-in terminal 23 at the same position before the power supply and after the temperature is stable in a closed environment, and take a difference therebetween to obtain an absolute value. In this embodiment, the temperature rises greater than 50 K is unqualified.

**Table 10: Influence of different contact resistances between the flat terminal 113 and the plug-in terminal 23 on the conductivity and the temperature rise**

| Different contact resistances between the flat terminal 113 and the plug-in terminal 23 (mΩ) | | | | | | | | |
|---|---|---|---|---|---|---|---|---|
| 10 | 9 | 8 | 6 | 4 | 3 | 2 | 1 | 0.9 |

| Temperature rise of the plugged structure (k) | | | | | | | | |
|---|---|---|---|---|---|---|---|---|
| 55 | 48 | 42 | 35 | 29 | 22 | 18 | 16 | 7 |

| Conductivity of the plugged structure (%) | | | | | | | | |
|---|---|---|---|---|---|---|---|---|
| 98.8 | 99.3 | 99.5 | 99.6 | 99.8 | 99.7 | 99.8 | 99.8 | 99.9 |

As can be seen from Table 10, when the contact resistance between the flat terminal 113 and the plug-in terminal 23 is greater than 9 mΩ, the temperature rise of the plugged structure exceeds 50 K, and at the same time, the conductivity of the plugged structure is less than 99%, which does not meet the standard requirement. Therefore, the inventor sets the contact resistance between the flat terminal 113 and the plug-in terminal 23 to be less than 9 mΩ. Meanwhile, the inventor finds that when the contact resistance is less than 1 mΩ, the amplitude of the temperature rise is further decreased obviously, and at the same time, the conductivity is also high, so the contact resistance between the flat terminal 113 and the plug-in terminal 23 is exemplarily less than 1 mΩ.

In an embodiment, the number of times of plug-in or pull-out between the male-end connecting mechanism 10 and the female-end connecting mechanism 20 is 9 or more. When the connecting mechanism is to be assembled with an electrical appliance, the male-end connecting mechanism 10 and the female-end connecting mechanism 20 should be assembled together, and during the subsequent maintenance and disassembly, it might be required to separate the male-end connecting mechanism 10 and the female-end connecting mechanism 20 before plug-in or pull-out. Thus, the number of times of plug-in or pull-out between the male-end connecting mechanism 10 and the female-end connecting mechanism 20 should not be less than 9. Otherwise, the male-end connecting mechanism 10 or the female-end connecting mechanism 20 may be damaged during certain disassembly or maintenance and the current cannot be conducted, so it is necessary to replace the whole connecting mechanism including the wiring harnesses, which not only consumes the maintenance time but also increases the maintenance cost. Therefore, either the materials of the male-end connecting mechanism 10 and the female-end connecting mechanism 20, or the plug-in mechanism, the locking mechanism and the sealing mechanism therebetween should be bearable to the disassembly and assembly for at least 9 times to meet the use requirements of the connecting mechanism.

In an embodiment, the weight of the male-end connecting mechanism 10 is less than or equal to 305 g. As illustrated in FIG. 1, the male-end connector is located above the connecting mechanism, and plugged and fixed with the female-end connecting mechanism 20. When the weight of the male-end connecting mechanism 10 is too large, the female-end connecting mechanism 20 also bears a large weight, so that the whole connecting mechanism vibrates along with the vibration of the electrical appliance. Due to the inertia, the male-end connecting mechanism 10 will be subjected to a large vibration, resulting in abnormal sound which is not allowed during the use of the electrical appliance.

In order to verify the influence of the weight of the male-end connecting mechanism 10 on the abnormal sound of the connecting mechanism, the inventor adopts the same female-end connecting mechanism 20 and the samples of the male-end connecting mechanism 10 with different weights which are assembled and mounted on a vibration test bench, and then carries out a vibration test to observe whether the male-end connecting mechanism 10 generates abnormal sound during the vibration test. The test results are shown in Table 11.

**Table 11: Influence of the weight of the male-end connecting mechanism 10 on the abnormal sound of the connecting mechanism**

| | | | | | | | | | |
|---|---|---|---|---|---|---|---|---|---|
| Weight (g) | 265 | 275 | 285 | 295 | 305 | 315 | 325 | 335 | 345 |
| Whether there is abnormal sound | No | No | No | No | No | Yes | Yes | Yes | Yes |

As can be seen from Table 11, when the weight of the male-end connecting mechanism 10 is greater than 305 g, abnormal sound is generated in the male-end connecting mechanism 10 during the vibration test, and the test result is unqualified. Therefore, the inventor selects that the weight of the male-end connecting mechanism 10 to be less than or equal to 305 g.

**In** an embodiment, the height of the male-end connecting mechanism 10 along the plug-in or pull-out direction is less than or equal to 108 mm. After being assembled together, the male-end connecting mechanism 10 and the female-end connecting mechanism 20 should be mounted in the electrical appliance. However, the space reserved in the electrical appliance is generally small, and when the male-end connecting mechanism 10 is high, it usually cannot be mounted into the electrical appliance and the raw material will be wasted. Therefore, the male-end connecting mechanism 10 should be lower than a certain height when during the design.

In order to verify the influence of the height of the male-end connecting mechanism 10 along the plug-in or pull-out direction on the mounting of the connecting mechanism, the inventor adopts the same female-end connecting mechanism 20 and the samples of the male-end connecting mechanism 10 with different heights along the plug-in or pull-out direction which are assembled and mounted on the electrical appliance, and observes whether the male-end connecting mechanism 10 interferes with other parts of the electrical appliance during mounting. The test results are shown in Table 12.

**Table 12: Influence of the height of the male-end connecting mechanism 10 along the plug-in or pull-out direction on the mounting of the connecting mechanism**

| | | | | | | | | | |
|---|---|---|---|---|---|---|---|---|---|
| Height (mm) | 68 | 78 | 88 | 98 | 108 | 118 | 128 | 138 | 148 |
| Whether there is interference | No | No | No | No | No | Yes | Yes | Yes | Yes |

As can be seen from Table 12, when the height along the plug-in or pull-out direction is greater than 108 mm, the male-end connecting mechanism 10 cannot be mounted in the designated position of the electrical appliance, and the test result is unqualified. The height of the male-end connecting mechanism 10 along the plug-in or pull-out direction is selected to be less than or equal to 108 mm.

The present disclosure further provides an electrical energy transmission device, which includes the connecting mechanism.

The present disclosure further provides a motor vehicle, which includes the connecting mechanism and the electrical energy transmission device.

The connecting mechanism of the present disclosure is provided with the injection-molded male-end shell 12, which is simple in processing and low in cost, and can be directly injected into the busbar 11 for insulation, so that the mounting of the busbar 11 can be reduced, and a front end of the busbar 11 can be molded into various shapes as required, without considering the assembly problem, thereby saving the processing procedure and reducing the processing cost.

In the connecting mechanism of the present disclosure, the busbars are stacked at a proper interval to effectively reduce the electromagnetic interference to other parts after the busbars are energized, thereby achieving the goal of canceling a shielding layer structure of high-voltage charging harnesses and meeting the requirements of reducing the cost and weight.

The material of the busbar 11 may include aluminum or aluminum alloy, which is lighter in weight and lower in price, and can better meet the requirements of energy saving, emission reduction and cost reduction of the motor vehicle.

It is unnecessary to separately manufacture the flat terminal 113, and the busbar 11 can be used as the flat terminal 113 just by bending and chamfering the front end of the flat wire core 111, which saves the processing cost of the flat terminal 113, reduces the connection between the flat wire core 111 and the flat terminal 113, decreases the voltage drop of the busbar 11, and improves the mechanical and electrical properties of the connecting mechanism.

In the connection between the flat terminal 113 and the plug-in terminal 23, the conductive anticorrosion layer can reduce the electrochemical reaction between the flat terminal 113 of the busbar 11 and the plug-in terminal 23, and solve the technical problem that the busbar 11 is connectable to other terminals or electrical appliances only through copper terminals.

The plug-in terminal 23 is composed of a plurality of sheet terminals 234 which are stacked. The sheet terminals 234 are easy to be deformed and can be plugged with the flat terminal 113 of the busbar 11. The flat terminal 113 of the busbar 11 is in contact with the strip grooves of the sheet terminals 234 to realize an electrical connection, thereby ensuring the stability of the connection between the plug-in terminal 23 and the busbar 11.

Through the connection between the flat terminal 113 and the plug-in terminal 23, the flat terminal 113 of the busbar 11 realizes the terminal function itself and is directly connected to the plug-in terminal 23, which solves the problems of high cost and low efficiency of connecting a copper terminal to the busbar 11, and can realize safe and rapid plug-in or pull-out.

The plug-in terminal 23 has a memory function. The strip groove of the plug-in terminal 23 is generally in an expanded state below the transformation temperature. At this time, the flat terminal 113 of the busbar 11 can be plugged without an insertion force, so that the operator can easily plug the electrical appliances. During operation, current is conducted to the plug-in terminal 23, and the temperature thereof gradually increases due to the effect of resistance. When the temperature rises above the transformation temperature, the strip groove of the plug-in terminal 23 will contract radially, so that the contact area and the contact force between the strip groove of the plug-in terminal 23 and the flat terminal 113 of the busbar can be increased by the temperature rise, and then the contact reliability can be improved. Since the insertion force is omitted, the work is easier and the working efficiency is improved.

The embedded high-voltage interlock structure 24 replaces the previous assembled high-voltage interlock structure, and is fixed in the connector by integral injection-molding without assembling, so that the cost is reduced and the high-voltage interlocking effect is completely satisfied.

The sealing structure of the connecting mechanism is no longer a separate seal ring, but adopts a secondary injection-molded sealing structure to replace the traditional seal ring, so as to be directly molded on the connecting mechanism, thereby achieving a better injection bonding and a lower cost.

By adopting the temperature measuring structure, it is possible to separately monitor the terminal temperature inside the connecting mechanism, and avoid the situation that the temperature of the connecting mechanism cannot be monitored due to the damage of the temperature sensors in other positions.

## Claims

1. A connecting mechanism, including a male-end connecting mechanism (10) and a female-end connecting mechanism (20), wherein the male-end connecting mechanism (10) includes a busbar (11), a flat terminal (113) and a male-end shell (12) connected to the busbar (11) and the flat terminal (113); the female-end connecting mechanism (20) includes a plug-in terminal (23) and a female-end shell (22) connected to the plug-in terminal (23); the male-end connecting mechanism (10) is electrically connected to the plug-in terminal (23) in the female-end connecting mechanism (20) through the flat terminal (113), and the male-end shell (12) is connected to the female-end shell (22) to form the connecting mechanism;
wherein the male-end connecting mechanism (10) comprises two flat terminals (113), and two busbars (11) stacked in a height direction of the male-end shell (12), the male-end shell (12) is integrally injection-molded on at least part of the busbars (11) and on the periphery of at least part of the flat terminals (113) to form an insulating structure, each of the busbars (11) comprises a flat wire core (111) extending along the length direction of the male-end shell (12), a bent portion (1131) with an angle of 1_{°} to 180° is comprised between the flat wire core (111) and the flat terminal (113), and both of the flat terminals (113) protrude from the male-end shell (12) in the height direction of the male-end shell (12) and are spaced apart from each other in the length direction of the male-end shell (12); and
the female-end connecting mechanism (20) comprises two plug-in terminals (23), each of the plug-in terminals (23) comprises a fixing portion (231) and a wire clamping portion (232), the fixing portions (231) of the two plug-in terminals (23) are stacked in a height direction of the female-end shell (22), the wire clamping portions (232) of the two plug-in terminals (23) are spaced apart from each other in a width direction of the female-end shell (22), the wire clamping portions (232) are formed by stacking a plurality of sheet terminals (234), grooves are formed in the sheet terminals (234), and the two flat terminals (113) are respectively plugged into the grooves of the two plug-in terminals (23) and are respectively electrically connected to the wire clamping portions (232) of the two plug-in terminals (23).

2. The connecting mechanism according to claim 1, wherein the busbar (11) has a cross-sectional aspect ratio of 1:1 to 120:1.

3. The connecting mechanism according to claim 1, wherein the busbar (11) includes an outer insulating layer (112) which is partially stripped to expose the flat wire core (111), and an end of the outer insulating layer (112) is inside or abutted against the male-end shell (12).

4. The connecting mechanism according to claim 1, wherein the flat wire core (111) which has a hardness of 8 HV to 105 HV.

5. The connecting mechanism according to claim 1, wherein a vertical distance between two of the flat wire cores (111) being less than or equal to 27 cm.

6. The connecting mechanism according to claim 6, wherein a vertical distance between two of the flat wire cores (111) is less than or equal to 7 cm.

7. The connecting mechanism according to claim 1, wherein an overlap of the two flat wire cores (111) along a stacking direction ranging from 40% to 100%; or
a front end of which is connected to the flat terminal (113), and the male-end shell (12) wraps at least part of the flat terminal (113); or
the flat wire core (111) forms an integral structure with the flat terminal (113); or
the flat terminal (113) at least partially protrudes from the male-end shell (12), or the male-end shell (12) has an accommodating cavity and the flat terminal (113) at least partially protrudes from a bottom surface of the accommodating cavity without exceeding the male-end shell (12)
; or
the flat terminal (113) is at least partially provided with a conductive anticorrosion layer; optionally
the conductive anticorrosion layer has a thickness of 0.3 µm to 3000 µm; optionally
the conductive anticorrosion layer has a thickness of 2.5 µm to 1000 µm; or
an end of the flat terminal is provided with a chamfer.

8. The connecting mechanism according to claim 1, wherein the male-end connecting mechanism (10) includes an interlocking connector (14), which is at least partially integrally injection-molded in the male-end shell (12).

9. The connecting mechanism according to claim 1, wherein the female-end connecting mechanism (20) further includes a cable (21), the fixing portion (231) is electrically connected to a conductive part at a front end of the cable (21); or
the wire clamping portion (232) is sleeved by a clip (30) which is made of a memory alloy; optionally
a transformation temperature of the memory alloy is set in a range of 40°C to 70°C; when a temperature of the clip (30) is lower than the transformation temperature, the clip (30) is in an expanded state, and when the temperature of the clip (30) is higher than the transformation temperature, the clip (30) is in a clamped state; or
the wire clamping portion (232) is sleeved by a clip (30), which includes a sidewall (31), and an elastic unit (32) fixed on the sidewall (31) and in contacted connection with an outer side of the wire clamping portion (232); optionally
a pressure applied to the wire clamping portion (232) by the elastic unit (32) ranges from 3 N to 200 N; or
the elastic unit (32) is an elastic rubber body, a spring or a metal elastic sheet;
optionally
a gap between adjacent two of the sheet terminals (234) is less than 0.2 mm; or
the wire clamping portion (232) at least partially protrudes from an outer wall of the female-end shell (22), or the female-end shell (22) is provided with an opening boss where the wire clamping portion (232) is at least partially disposed.

10. The connecting mechanism according to claim 1, wherein the female-end shell (22) is integrally injection-molded on the periphery of at least part of the plug-in terminal (23) to form an insulating structure; or
the female-end connecting mechanism (20) further includes a cable (21) electrically connected to the plug-in terminal (23), the plug-in terminal (23) and at least part of the cable (21) are disposed in the female-end shell (22), and the plug-in terminal (23) is at least partially exposed outside the female-end shell (22).

11. The connecting mechanism according to claim 8, wherein the female-end connecting mechanism (20) includes a high-voltage interlock structure (24), which is electrically connected to the interlocking connector (14) to form a loop.

12. The connecting mechanism according to claim 1, wherein the female-end connecting mechanism (20) and/or the male-end connecting mechanism (10) has a sealing structure (40); optionally
the sealing structure (40) is secondary injection-molded on the female-end shell (22) and/or the male-end shell (12); or
the female-end connecting mechanism (20) and/or the male terminal connecting mechanism (10) has at least one temperature measuring structure for measuring a temperature of the plug-in terminal (23) and/or the busbar (11) and/or the flat terminal (113); optionally
the temperature measuring structure is attached to the plug-in terminal (23) and/or the busbar (11) and/or the flat terminal (113) to measure a temperature thereof; or
the male-end connecting mechanism (10) has at least one temperature measuring structure, and there are at least two of the busbars (11) with the temperature measuring structure therebetween to measure temperatures thereof; or
the male-end connecting mechanism (10) and the female-end connecting mechanism (20) are connected by one or more of adhesive connection, magnetic connection, bayonet connection, plug-in connection, latching connection, binding connection, threaded connection, riveting connection and welding connection; or
the plug-in terminal (23) includes a wire clamping portion (232), the flat terminal (113) is plugged with the wire clamping portion (232) to form an electrical connection, and a plug-in force between the flat terminal (113) and the wire clamping portion (232) is between 3 N and 150 N; optionally
the plug-in force between the flat terminal (113) and the wire clamping portion (232) is between 10 N and 130 N.

13. An electrical energy transmission device, including the connecting mechanism according to any one of claims 1 to 12.

14. A motor vehicle, including the connecting mechanism according to any one of claims 1 to 12.

## Patentansprüche

1. Verbindungsmechanismus, umfassend einen Steckverbindungsmechanismus (10) und einen Buchsenverbindungsmechanismus (20), wobei der Steckverbindungsmechanismus (10) eine Sammelschiene (11), einen Flachanschluss (113) und eine Steckhülse (12) umfasst, die mit der Sammelschiene (11) und dem Flachanschluss (113) verbunden ist; der Buchsenverbindungsmechanismus (20) einen Steckanschluss (23) und eine Buchsenhülse (22) umfasst, die mit dem Steckanschluss (23) verbunden ist; der Steckverbindungsmechanismus (10) über den Flachanschluss (113) elektrisch mit dem Steckanschluss (23) im Buchsenverbindungsmechanismus (20) verbunden ist und die Steckhülse (12) mit der Buchsenhülse (22) verbunden ist, um den Verbindungsmechanismus zu bilden;
wobei der Steckverbindungsmechanismus (10) zwei Flachanschlüsse (113) und zwei Sammelschienen (11) umfasst, die in Höhenrichtung der Steckhülse (12) gestapelt sind, wobei die Steckhülse (12) integral auf mindestens einen Teil der Sammelschienen (11) und auf den Umfang mindestens eines Teils der Flachanschlüsse (113) einstückig angespritzt ist, um eine isolierende Struktur zu bilden, wobei jede der Sammelschienen (11) einen flachen Drahtkern (111) aufweist, der sich entlang der Längsrichtung der Steckhülse (12) erstreckt, wobei zwischen dem flachen Drahtkern (111) und dem Flachanschluss (113) ein gebogener Abschnitt (1131) mit einem Winkel von 1° bis 180° vorgesehen ist, und beide Flachanschlüsse (113) in Höhenrichtung der Steckhülse (12) aus dieser heraus ragen und in Längsrichtung der Steckhülse (12) voneinander beabstandet sind; und
der Buchsenverbindungsmechanismus (20) zwei Steckanschlüsse (23) aufweist, wobei jeder der Steckanschlüsse (23) einen Befestigungsabschnitt (231) und einen Drahtklemmabschnitt (232) aufweist, die Befestigungsabschnitte (231) der beiden Steckanschlüsse (23) in einer Höhenrichtung der Buchsenhülse (22) gestapelt sind, die Drahtklemmabschnitte (232) der beiden Steckanschlüsse (23) in Breitenrichtung der Buchsenhülse (22) voneinander beabstandet sind, die Drahtklemmabschnitte (232) durch Stapeln einer Vielzahl von Flachanschlüssen (234) gebildet sind, in den Flachanschlüssen (234) Nuten ausgebildet sind, und die beiden Flachanschlüsse (113) jeweils in die Nuten der beiden Steckanschlüsse (23) eingesteckt und jeweils elektrisch mit den Drahtklemmabschnitten (232) der beiden Steckanschlüsse (23) verbunden sind.

2. Verbindungsmechanismus nach Anspruch 1, bei dem die Sammelschiene (11) ein Querschnittsverhältnis von 1:1 bis 120:1 aufweist.

3. Verbindungsmechanismus nach Anspruch 1, bei dem die Sammelschiene (11) eine äußere Isolierschicht (112) aufweist, die teilweise abgezogen ist, um den flachen Drahtkern (111) freizulegen, und ein Ende der äußeren Isolierschicht (112) sich innerhalb der Steckhülse (12) befindet oder an dieser anliegt.

4. Verbindungsmechanismus nach Anspruch 1, bei dem der flache Drahtkern (111) eine Härte von 8 HV bis 105 HV aufweist.

5. Verbindungsmechanismus nach Anspruch 1, bei dem der vertikale Abstand zwischen zwei der flachen Drahtkerne (111) kleiner oder gleich 27 cm ist.

6. Verbindungsmechanismus nach Anspruch 6, bei dem der vertikale Abstand zwischen zwei der flachen Drahtkerne (111) kleiner oder gleich 7 cm ist.

7. Verbindungsmechanismus nach Anspruch 1, bei dem eine Überlappung der beiden flachen Drahtkerne (111) entlang einer Stapelrichtung zwischen 40 % und 100 % beträgt; oder
dessen vorderes Ende mit dem Flachanschluss (113) verbunden ist und die Steckhülse (12) mindestens einen Teil des Flachanschlusses (113) umhüllt; oder
der flache Drahtkern (111) eine integrale Struktur mit dem Flachanschluss (113) bildet; oder
der Flachanschluss (113) zumindest teilweise aus der Steckhülse (12) herausragt, oder die Steckhülse (12) einen Aufnahmeraum aufweist und der Flachanschluss (113) zumindest teilweise aus einer Bodenfläche des Aufnahmeraums herausragt, ohne die Steckhülse (12) zu überschreiten; oder
der Flachanschluss (113) zumindest teilweise mit einer leitfähigen Korrosionsschutzschicht versehen ist; optional
die leitfähige Korrosionsschutzschicht eine Dicke von 0,3 µm bis 3000 µm aufweist; optional
die leitfähige Korrosionsschutzschicht eine Dicke von 2,5 µm bis 1000 µm aufweist; oder
ein Ende des Flachanschlusses mit einer Abschrägung versehen ist.

8. Verbindungsmechanismus nach Anspruch 1, bei dem der Steckverbindungsmechanismus (10) einen Verriegelungsverbinder (14) umfasst, der zumindest teilweise integral in die Steckhülse (12) eingespritzt ist.

9. Verbindungsmechanismus nach Anspruch 1, bei dem der Buchsenverbindungsmechanismus (20) ferner ein Kabel (21) umfasst, wobei der Befestigungsabschnitt (231) elektrisch mit einem leitfähigen Teil an einem vorderen Ende des Kabels (21) verbunden ist; oder
der Drahtklemmabschnitt (232) von einer Klammer (30) ummantelt ist, die aus einer Formgedächtnislegierung besteht; optional
eine Umwandlungstemperatur der Formgedächtnislegierung in einem Bereich von 40 °C bis 70 °C eingestellt ist; wenn eine Temperatur der Klammer (30) niedriger als die Umwandlungstemperatur ist, sich die Klammer (30) in einem expandierten Zustand befindet, und wenn die Temperatur der Klammer (30) höher als die Umwandlungstemperatur ist, sich die Klammer (30) in einem geklemmten Zustand befindet; oder
der Drahtklemmabschnitt (232) von einer Klammer (30) ummantelt ist, die eine Seitenwand (31) und eine elastische Einheit (32) umfasst, die an der Seitenwand (31) befestigt ist und in Kontakt mit einer Außenseite des Drahtklemmabschnitts (232) steht; optional
ein durch die elastische Einheit (32) auf den Drahtklemmabschnitt (232) ausgeübter Druck im Bereich von 3 N bis 200 N liegt; oder
die elastische Einheit (32) ein elastischer Gummikörper, eine Feder oder ein elastisches Metallblech ist;
optional ein Abstand zwischen zwei benachbarten der Flachanschlüsse (234) weniger als 0,2 mm beträgt; oder
der Drahtklemmabschnitt (232) zumindest teilweise aus einer Außenwand der Buchsenhülse (22) herausragt, oder die Buchsenhülse (22) mit einem Öffnungsvorsprung versehen ist, in dem der Drahtklemmabschnitt (232) zumindest teilweise angeordnet ist.

10. Verbindungsmechanismus nach Anspruch 1, bei dem die Buchsenhülse (22) integral an den Umfang mindestens eines Teils des Steckanschlusses (23) angespritzt ist, um eine isolierende Struktur zu bilden; oder
der Buchsenverbindungsmechanismus (20) ferner ein Kabel (21) umfasst, das elektrisch mit dem Steckanschluss (23) verbunden ist, wobei der Steckanschluss (23) und mindestens ein Teil des Kabels (21) in der Buchsenhülse (22) angeordnet sind und der Steckanschluss (23) mindestens teilweise außerhalb der Buchsenhülse (22) freiliegt.

11. Verbindungsmechanismus nach Anspruch 8, bei dem der Buchsenverbindungsmechanismus (20) eine Hochspannungs-Verriegelungsstruktur (24) umfasst, die elektrisch mit dem Verriegelungsverbinder (14) verbunden ist, um eine Schleife zu bilden.

12. Verbindungsmechanismus nach Anspruch 1, bei dem der Buchsenverbindungsmechanismus (20) und/oder der Steckverbindungsmechanismus (10) eine Dichtungsstruktur (40) aufweist; optional
die Dichtungsstruktur (40) sekundär auf die Buchsenhülse (22) und/oder die Steckhülse (12) angespritzt ist; oder
der Buchsenverbindungsmechanismus (20) und/oder der Steckverbindungsmechanismus (10) mindestens eine Temperaturmessstruktur zum Messen einer Temperatur des Steckanschlusses (23) und/oder der Sammelschiene (11) und/oder des Flachanschlusses (113) aufweist; optional
die Temperaturmessstruktur an dem Steckanschluss (23) und/oder der Sammelschiene (11) und/oder dem Flachanschluss (113) angebracht ist, um deren Temperatur zu messen; oder
der Steckverbindungsmechanismus (10) mindestens eine Temperaturmessstruktur aufweist und mindestens zwei Sammelschienen (11) mit der Temperaturmessstruktur dazwischen vorhanden sind, um deren Temperaturen zu messen; oder
der Steckverbindungsmechanismus (10) und der Buchsenverbindungsmechanismus (20) durch eine oder mehrere der folgenden Verbindungen verbunden sind: Klebeverbindung, Magnetverbindung, Bajonettverbindung, Steckverbindung, Rastverbindung, Bindungsverbindung, Schraubverbindung, Nietverbindung und Schweißverbindung; oder
der Steckanschluss (23) einen Drahtklemmabschnitt (232) umfasst, der Flachanschluss (113) mit dem Drahtklemmabschnitt (232) gesteckt ist, um eine elektrische Verbindung herzustellen, und eine Steckkraft zwischen dem Flachanschluss (113) und dem Drahtklemmabschnitt (232) zwischen 3 N und 150 N liegt; optional
die Steckkraft zwischen dem Flachanschluss (113) und dem Drahtklemmabschnitt (232) zwischen 10 N und 130 N liegt.

13. Elektrische Energieübertragungsvorrichtung, die den Verbindungsmechanismus gemäß einem der Ansprüche 1 bis 12 aufweist.

14. Kraftfahrzeug, das den Verbindungsmechanismus gemäß einem der Ansprüche 1 bis 12 aufweist.

## Revendications

1. Mécanisme de connexion comprenant un mécanisme de connexion mâle (10) et un mécanisme de connexion femelle (20), le mécanisme de connexion mâle (10) comprenant une barre omnibus (11), un connecteur plat (113) et une douille mâle (12) connectée à la barre omnibus (11) et au connecteur plate (113); le mécanisme de connexion mâle (20) comprenant un connecteur mâle (23) et une douille femelle (22) reliée au connecteur mâle (23); le mécanisme de connexion mâle (10) est connecté électriquement au connecteur mâle (23) dans le mécanisme de connexion femelle (20) via le connecteur plat (113), et la douille mâle (12) est connectée à la douille femelle (22) pour former le mécanisme de connexion;
le mécanisme de connexion mâle (10) comprenant deux connecteurs plats (113) et deux barres omnibus (11) empilées dans le sens de la hauteur de la douille mâle (12), la douille mâle (12) étant moulée d'un seul tenant sur au moins une partie des barres omnibus (11) et sur la périphérie d'au moins une partie des connecteurs plats (113) afin de former une structure isolante, chacune des barres omnibus (11) comportant un noyau de fil plat (111) s'étendant dans la direction longitudinale de la douille mâle (12), une partie courbée (1131) formant un angle de 1° à 180° étant prévue entre le noyau de fil plat (111) et le connecteur plat (113), et les deux connecteurs plates (113) dépassant de la douille mâle (12) dans la direction de la hauteur de celle-ci et étant espacées l'une de l'autre dans la direction longitudinale de la douille mâle (12); et
le mécanisme de connexion femelle (20) comporte deux connecteurs mâles (23), chacun des connecteurs enfichables (23) comprenant une partie de fixation (231) et une partie de serrage de fil (232), les parties de fixation (231) des deux connecteurs mâles (23) sont empilées dans une direction verticale de la douille femelle (22), les parties de serrage de fil (232) des deux connecteurs mâles (23) sont espacées l'une de l'autre dans le sens de la largeur de la douille femelle (22), les parties de serrage de fil (232) sont formées par empilement d'une pluralité de connecteurs plats (234), des rainures sont formées dans les connecteurs plats (234) et les deux connecteurs plats (113) sont respectivement enfichés dans les rainures des deux connecteurs mâles (23) et sont respectivement reliés électriquement aux sections de serrage de fil (232) des deux connecteurs mâles (23).

2. Mécanisme de connexion selon la revendication 1, dans lequel la barre omnibus (11) présente un rapport de section transversale de 1:1 à 120:1.

3. Mécanisme de connexion selon la revendication 1, dans lequel la barre omnibus (11) présente une couche isolante extérieure (112) qui est partiellement retirée afin de dégager le noyau de fil plat (111), et une extrémité de la couche isolante extérieure (112) se trouve à l'intérieur de la douille mâle (12) ou est en contact avec celle-ci.

4. Mécanisme de connexion selon la revendication 1, dans lequel le noyau de fil plat (111) présente une dureté comprise entre 8 HV et 105 HV.

5. Mécanisme de connexion selon la revendication 1, dans lequel la distance verticale entre deux des noyaux de fil plates (111) est inférieure ou égale à 27 cm.

6. Mécanisme de connexion selon la revendication 6, dans lequel la distance verticale entre deux des noyaux de fil plates (111) est inférieure ou égale à 7 cm.

7. Mécanisme de liaison selon la revendication 1, dans lequel le chevauchement des deux noyaux de fil plates (111) le long d'une direction d'empilement est compris entre 40 % et 100 %; ou
dont l'extrémité avant est reliée aux connecteur plat (113) et la douille mâle (12) enveloppe au moins une partie du connecteurs plats (113); ou
le noyau de fil plat (111) forme une structure intégrale avec le connecteur plat (113); ou
le connecteur plat (113) dépasse au moins partiellement de la douille mâle (12), ou la douille mâle (12) présente un espace de réception et le connecteur plat (113) dépasse au moins partiellement d'une surface inférieure de l'espace de réception sans dépasser de la douille mâle (12); ou
le connecteur plat (113) est au moins partiellement recouvert d'une couche anticorrosion conductrice; en option
la couche anticorrosion conductrice présente une épaisseur comprise entre 0,3 µm et 3000 µm; en option
la couche anticorrosion conductrice présente une épaisseur comprise entre 2,5 µm et 1000 µm; ou
une extrémité du connecteur plat est pourvue d'un biseau.

8. Mécanisme de connexion selon la revendication 1, dans lequel le mécanisme de connexion mâle (10) comprend un connecteur de verrouillage (14) qui est au moins partiellement moulé par injection de manière intégrale dans la douille mâle (12).

9. Mécanisme de connexion selon la revendication 1, dans lequel le mécanisme de connexion femelle (20) comprend en outre un câble (21), la partie de fixation (231) étant connectée électriquement à une partie conductrice à une extrémité avant du câble (21); ou
la partie de serrage de fil (232) est recouverte d'une pince (30) constituée d'un alliage à mémoire de forme; en option
une température de transformation de l'alliage à mémoire de forme est réglée dans une plage comprise entre 40 °C et 70 °C ; lorsque la température de la pince (30) est inférieure à la température de transformation, la pince (30) se trouve dans un état expansé, et lorsque la température de la pince (30) est supérieure à la température de transformation, la pince (30) se trouve dans un état serré; ou
la partie de serrage de fil (232) est entourée par une pince (30) comprenant une paroi latérale (31) et une unité élastique (32) fixée à la paroi latérale (31) et en contact avec une face extérieure de la partie de serrage de fil (232); en option
une pression exercée par l'unité élastique (32) sur la partie de serrage de fil (232) est comprise entre 3 N et 200 N; ou
l'unité élastique (32) est un corps élastique en caoutchouc, un ressort ou une feuille métallique élastique;
en option, une distance entre deux bornes plates adjacentes (234) est inférieure à 0,2 mm; ou
la partie de serrage de fil (232) dépasse au moins partiellement d'une paroi extérieure de la douille femelle (22), ou la douille femelle (22) est pourvue d'une saillie d'ouverture dans laquelle la partie de serrage de fil (232) est au moins partiellement disposée.

10. Mécanisme de connexion selon la revendication 1, dans lequel la douille femelle (22) est moulée d'un seul tenant sur la périphérie d'au moins une partie du connecteur mâle (23) afin de former une structure isolante; ou
le mécanisme de connexion femelle (20) comprend en outre un câble (21) connecté électriquement au connecteur mâle (23), le connecteur mâle (23) et au moins une partie du câble (21) étant disposés dans la douille femelle (22) et le connecteur mâle (23) étant au moins partiellement exposé à l'extérieur de la douille femelle (22).

11. Mécanisme de connexion selon la revendication 8, dans lequel le mécanisme de connexion femelle (20) comprend une structure de verrouillage haute tension (24) qui est reliée électriquement au connecteur de verrouillage (14) pour former une boucle.

12. Mécanisme de connexion selon la revendication 1, dans lequel le mécanisme de connexion femelle (20) et/ou le mécanisme de connexion mâle (10) comporte une structure d'étanchéité (40); en option
la structure d'étanchéité (40) est moulée par injection de manière secondaire sur la douille femelle (22) et/ou la douille mâle (12); ou
le mécanisme de connexion femelle (20) et/ou le mécanisme de connexion mâle (10) comportent au moins une structure de mesure de température pour mesurer la température du connecteur mâle (23) et/ou de la barre omnibus (11) et/ou du connecteur plat (113); en option
la structure de mesure de température est montée sur le connecteur mâle (23) et/ou la barre omnibus (11) et/ou le connecteur plat (113) afin de mesurer leur température; ou
le mécanisme de connexion mâle (10) comprend au moins une structure de mesure de température et au moins deux barres omnibus (11) sont prévues avec la structure de mesure de température entre elles afin de mesurer leurs températures; ou
le mécanisme de connexion mâle (10) et le mécanisme de connexion femelle (20) sont reliés par une ou plusieurs des connexions suivantes: connexion adhésive, connexion magnétique, connexion à baïonnette, connexion enfichable, connexion à encliquetage, connexion par liaison, connexion vissée, connexion rivetée et connexion soudée; ou
le connecteur mâle (23) comprend une partie de serrage de fil (232), le connecteur plat (113) est enfiché dans la partie de serrage de fil (232) afin d'établir une connexion électrique, et une force d'enfichage entre le connecteur plat (113) et la partie de serrage de fil (232) est comprise entre 3 N et 150 N; en option
la force d'enfichage entre la connecteur plate (113) et la partie de serrage de fil (232) est comprise entre 10 N et 130 N.

13. Dispositif de transmission d'énergie électrique comprenant le mécanisme de connexion selon l'une des revendications 1 à 12.

14. Véhicule automobile comprenant le mécanisme de connexion selon l'une des revendications 1 à 12.
